# EUROPÄISCHE PATENTANMELDUNG

(11) **EP 3 974 688 A1**
(43) Veröffentlichungstag der Anmeldung: **30.03.2022**
(21) Anmeldenummer: 21208520.3
(22) Anmeldetag: 27.11.2015
(51) Int. Cl.: F16J 15/3284, F16J 15/3236, B29C 45/37, F16J 15/328, B29C 45/00, F16J 15/32, F16J 15/3212, F16J 15/56, F16L 11/12, F16L 33/30

(54) **DICHTELEMENT UND VERFAHREN ZUM HERSTELLEN EINES DICHTELEMENTS**

(30) Priorität: 28.11.2014 DE 102014224378
(62) Teilanmeldung aus: 15801820.0
(71) Anmelder: ElringKlinger AG, 72581 Dettingen (DE); Elringklinger Kunststofftechnik GmbH, 74321 Bietigheim-Bissingen (DE)
(72) Erfinder: Hocker, Klaus, 74379 Ingersheim (DE); Schuhmacher, Walter, 74321 Bietigheim-Bissingen (DE); Klein, Patrick, 70771 Leinfelden-Echterdingen (DE); Kopp, Fabian, 71732 Tamm (DE); Stern, Claudia, 73497 Tannhausen (DE)
(74) Vertreter: DTS Patent- und Rechtsanwälte Schnekenbühl und Partner mbB

(57) **Zusammenfassung**

Um ein Dichtelement (100) bereitzustellen, welches eine zuverlässige Abdichtung gewährleistet und einfach und kostengünstig herstellbar ist, wird vorgeschlagen, dass ein Grundkörper (132) des Dichtelements vorzugsweise aus einem teilfluorierten oder vollfluorierten thermoplastischen Kunststoffmaterial gebildet ist und zumindest einen Teil seiner endgültigen äußeren Form oder nur einen Teil seiner endgültigen äußeren Form insbesondere in einem Hochdruckprozess und/oder in einem Hochtemperaturprozess erhalten hat.

## Beschreibung

Die vorliegende Erfindung betrifft ein Dichtelement, insbesondere zur Verwendung als Stangendichtung, Kolbendichtung und/oder Wellendichtung.

Ein solches Dichtelement ist beispielsweise aus der DE 10 2012 112 594 A1 bekannt.

Der vorliegenden Erfindung liegt die Aufgabe zugrunde, ein Dichtelement bereitzustellen, welches eine zuverlässige Abdichtung gewährleistet und einfach und kostengünstig herstellbar ist.

Diese Aufgabe wird beispielsweise durch ein Dichtelement gemäß Anspruch 1 gelöst.

Günstig kann es sein, wenn das Dichtelement einen Grundkörper aus einem thermoplastischen Kunststoffmaterial umfasst, wobei der Grundkörper zumindest einen Teil seiner endgültigen äußeren Form in einem Hochdruckprozess und/oder in einem Hochtemperaturprozess erhalten hat.

Alternativ hierzu kann vorgesehen sein, dass das Dichtelement einen Grundkörper aus einem thermoplastischen Kunststoffmaterial umfasst, wobei der Grundkörper nur einen Teil seiner endgültigen äußeren Form in einem Hochdruckprozess und/oder in einem Hochtemperaturprozess erhalten hat.

Das Dichtelement, insbesondere der Grundkörper des Dichtelements, ist vorzugsweise endkonturnah hergestellt.

Eine endgültige äußere Form ist insbesondere diejenige Form, welche der Grundkörper im Benutzungszustand des Dichtelements oder im zur Benutzung bereiten Zustand aufweist.

Eine endgültige äußere Form ist ferner insbesondere eine Form, in welcher keine weitere Bearbeitung, beispielsweise keine Umformung der Oberfläche, mehr stattfindet, bevor der Grundkörper als Bestandteil des Dichtelements bestimmungsgemäß verwendet wird.

Vorteilhaft kann es sein, wenn der Grundkörper zumindest abschnittsweise oder nur abschnittsweise eine Oberflächenbeschaffenheit aufweist, welche ein in einem Hochdruckprozess und/oder in einem Hochtemperaturprozess geformter und/oder fertiggestellter Körper aufweist.

Günstig kann es sein, wenn der Grundkörper zumindest abschnittsweise oder nur abschnittsweise eine Oberflächenbeschaffenheit aufweist, welche ein in einem Spritzgussprozess geformter und/oder fertiggestellter Körper aufweist.

Bei einer Ausgestaltung der Erfindung kann vorgesehen sein, dass der Grundkörper im Wesentlichen ringförmig ausgebildet ist.

Der Grundkörper umfasst vorzugsweise einen oder mehrere bezüglich der Ringform radial innere Dichtabschnitte sowie einen oder mehrere radial äußere Dichtabschnitte.

Nachfolgend wird zur Vereinfachung im Singular auf die Dichtabschnitte eingegangen. Selbstverständlich können dabei jedoch auch stets mehrere Dichtabschnitte mit einzelnen oder mehreren der genannten Merkmale vorgesehen sein.

Der Grundkörper kann beispielsweise kreisringförmig ausgebildet sein.

Ein radial innerer Dichtabschnitt dient vorzugsweise der dynamischen Abdichtung an einem beweglichen Element, insbesondere einem Kolben, einer Stange oder einer Welle.

Ein radial äußerer Dichtabschnitt dient vorzugsweise einer statischen Abdichtung an einem Gehäuse einer Dichtungsvorrichtung.

Günstig kann es sein, wenn der radial innere Dichtabschnitt und/oder der radial äußere Dichtabschnitt in dem Hochdruckprozess und/oder in dem Hochtemperaturprozess seine endgültige äußere Form erhalten hat.

Dabei kann vorgesehen sein, dass nur der radial innere Dichtabschnitt oder nur der radial äußere Dichtabschnitt oder sowohl der radial innere Dichtabschnitt als auch der radial äußere Dichtabschnitt in dem Hochdruckprozess und/oder in dem Hochtemperaturprozess die endgültige äußere Form erhalten haben.

Alternativ oder ergänzend hierzu kann vorgesehen sein, dass ein radial innerer Dichtabschnitt und/oder ein radial äußerer Dichtabschnitt die jeweilige endgültige äußere Form durch eine Nachbearbeitung, beispielsweise eine spanende Bearbeitung, erhalten haben.

Bei einer Weiterbildung der Erfindung kann vorgesehen sein, dass der Grundkörper zwei bezüglich einer axialen Richtung einander gegenüberliegende Enden umfasst, welche insbesondere im Benutzungszustand des Dichtelements mit voneinander zu trennenden Fluiden in Kontakt kommen.

Nur eines der Enden oder beide Enden haben die endgültige äußere Form vorzugsweise in dem Hochdruckprozess und/oder in dem Hochtemperaturprozess erhalten.

Alternativ oder ergänzend hierzu kann vorgesehen sein, dass nur eines der Enden oder beide Enden die endgültige äußere Form durch eine Nachbearbeitung, beispielsweise eine spanende Bearbeitung, erhalten haben.

Vorzugsweise sind eine oder beide Enden mit einer oder mehreren Federelementaufnahmen zur Aufnahme eines oder mehrerer Federelemente versehen. Günstig kann es sein, wenn der Grundkörper ein, insbesondere spritzgießbares, thermoplastisches Kunststoffmaterial umfasst oder aus einem, insbesondere spritzgießbaren, thermoplastischen Kunststoffmaterial gebildet ist.

Das thermoplastische Kunststoffmaterial kann insbesondere ein Fluor-Thermoplastmaterial, beispielsweise ein vollfluoriertes thermoplastisches Kunststoffmaterial, sein.

Der Grundkörper ist vorzugsweise ein Spritzgussbauteil, insbesondere ein Kunststoff-Spritzgussbauteil.

Das Dichtelement kann beispielsweise ein federunterstützter Nutring sein.

Das Dichtelement umfasst dann vorzugsweise ein oder mehrere Federelemente, welche beispielsweise aus einem Federstahl gebildet sind und zumindest näherungsweise eine Ringform aufweisen.

Ein oder mehrere Federelemente können dabei beispielsweise einen senkrecht zu einer Umfangsrichtung genommenen U-förmigen, V-förmigen oder L-förmigen Querschnitt aufweisen.

Ein oder mehrere Federelemente sind vorzugsweise selbstverkrallend ausgebildet, insbesondere derart, dass das eine oder die mehreren Federelemente ohne Hinterschnitt in der Federelementaufnahme des Dichtelements festlegbar ist.

Die vorliegende Erfindung betrifft ferner die Verwendung eines Dichtelements, insbesondere eines erfindungsgemäßen Dichtelements, als Stangendichtung, Kolbendichtung und/oder Wellendichtung.

Das Dichtelement wird dabei vorzugsweise in einer Kraftstoffpumpe und/oder einer Kolbenpumpe zur Abdichtung zweier Medienräume verwendet.

Die erfindungsgemäße Verwendung weist vorzugsweise einzelne oder mehrere der im Zusammenhang mit dem erfindungsgemäßen Dichtelement beschriebenen Merkmale und/oder Vorteile auf.

Ferner betrifft die vorliegende Erfindung ein Verfahren zur Herstellung eines Dichtelements.

Der Erfindung liegt diesbezüglich die Aufgabe zugrunde, ein Verfahren bereitzustellen, mittels welchem ein zuverlässig abdichtendes Dichtelement einfach und kostengünstig herstellbar ist.

Diese Aufgabe wird erfindungsgemäß durch ein Verfahren gemäß dem unabhängigen Verfahrensanspruch gelöst.

Vorzugsweise umfasst das Verfahren Folgendes:
Herstellen eines Grundkörpers des Dichtelements aus einem thermoplastischen Kunststoffmaterial, wobei der Grundkörper zumindest einen Teil seiner endgültigen äußeren Form oder nur einen Teil seiner endgültigen äußeren Form in einem Hochdruckprozess und/oder in einem Hochtemperaturprozess erhält.

Das erfindungsgemäße Verfahren weist vorzugsweise einzelne oder mehrere der im Zusammenhang mit dem erfindungsgemäßen Dichtelement und/oder der erfindungsgemäßen Verwendung beschriebenen Merkmale und/oder Vorteile auf.

Günstig kann es sein, wenn der Hochdruckprozess einen Prägeprozess, einen Pressprozess, einen Spritzgießprozess und/oder einen Druckgussprozess umfasst.

Der Grundkörper erhält somit zumindest einen Teil seiner endgültigen äußeren Form oder nur einen Teil seiner endgültigen äußeren Form vorzugsweise in einem Prägeprozess, einem Pressprozess, einem Spritzprozess und/oder einem Druckgussprozess.

Alternativ oder ergänzend hierzu kann vorgesehen sein, dass der Hochtemperaturprozess einen Heißprägeprozess, einen Heißpressprozess, einen Spritzprozess, einen Gussprozess, einen Sinterprozess und/oder einen Thermoformprozess umfasst.

Der Grundkörper erhält somit zumindest einen Teil seiner endgültigen äußeren Form oder nur einen Teil seiner endgültigen äußeren Form vorzugsweise in einem Heißprägeprozess, einem Heißpressprozesses, einem Spritzprozess, einem Gussprozess, einem Sinterprozess und/oder einem Thermoformprozess.

Günstig kann es sein, wenn der Grundkörper des Dichtelements nach der Durchführung des Hochdruckprozess und/oder des Hochtemperaturprozesses nur abschnittsweise nachbearbeitet wird.

Beispielsweise kann eine lediglich einseitige abschnittsweise Nachbearbeitung, insbesondere eine axial und/oder radial einseitige Nachbearbeitung vorgesehen sein.

Es kann jedoch auch vorgesehen sein, dass der Grundkörper in axialer Richtung beidseitig und/oder in radialer Richtung beidseitig nachbearbeitet wird.

Der Grundkörper wird vorzugsweise spanend bearbeitet.

Alternativ oder ergänzend hierzu kann vorgesehen sein, dass der Grundkörper zur Nachbearbeitung oder als Nachbearbeitung beschichtet wird.

Ein oder mehrere Dichtabschnitte des Dichtelements werden vorzugsweise durch eine Bearbeitung des Grundkörpers hergestellt.

Beispielsweise kann vorgesehen sein, dass ein oder mehrere dynamische Dichtabschnitte des Dichtelements und/oder ein oder mehrere statische Dichtabschnitte des Dichtelements durch eine Bearbeitung, insbesondere eine spanende Bearbeitung, des Grundkörpers hergestellt werden.

Eine oder mehrere Federelementaufnahmen zur Aufnahme eines oder mehrerer Federelemente sind vorzugsweise nicht nachbearbeitet, sondern erhalten ihre endgültige äußere Form vorzugsweise in dem Hochdruckprozess und/oder in dem Hochtemperaturprozess.

Besonders vorteilhaft kann es sein, wenn der Grundkörper aus, vorzugsweise spritzgießbarem, teilfluoriertem oder vollfluoriertem thermoplastischen Kunststoffmaterial hergestellt wird.

Es kann vorgesehen sein, dass der Grundkörper aus reinem PTFE-Material gebildet ist.

Der thermoplastische Kunststoff (Kunststoffmaterial) ist vorzugsweise schmelzverarbeitbar.

Der eingesetzte Kunststoff ist bevorzugt ein TFE-Copolymer mit einem Comonomeranteil von mehr als 0,5 Gew.%. Durch einen Comonomeranteil in diesem Größenordnungsbereich kann das Molekulargewicht der Polymerketten reduziert werden, ohne dass die mechanische Festigkeit des Materials beeinträchtigt wird, sodass die Schmelzviskosität herabgesetzt und eine Verarbeitung mittels Spritzguss ermöglicht wird.

Das Comonomer ist bevorzugt ausgewählt aus einem Perfluoralkylvinylether, insbesondere Perfluormethylvinylether, Hexafluorpropylen und Perfluor-(2,2-dimethyl-1,3-dioxol). Je nach Comonomeranteil handelt es sich bei dem vollfluorierten thermoplastischen Kunststoff dann um ein so genanntes schmelzverarbeitbares PTFE (Comonomeranteil bis etwa 3 Gew.%), um ein PFA (mehr als etwa 3 Gew.% Perfluoralkylvinylether als Comonomer), ein MFA (mehr als etwa 3 Gew.% Perfluormethylvinylether als Comonomer) oder ein FEP (mehr als etwa 3 Gew.% Hexafluorpropylen als Comonomer).

Das TFE-Copolymer kann auch verschiedene Comonomere umfassen. Ebenso ist es möglich, dass der vollfluorierte thermoplastische Kunststoff eine Mischung verschiedener TFE-Copolymere umfasst.

Das Material des Grundkörpers kann teilweise oder im Wesentlichen vollständig aus dem vollfluorierten thermoplastischen Kunststoff gebildet sein. Alternativ oder ergänzend hierzu kann das Material einen oder mehrere Füllstoffe umfassen, insbesondere Pigmente, reibungsvermindernde Additive und/oder die thermische Beständigkeit erhöhende Additive, um die Eigenschaften des Dichtelements weiter zu optimieren und an die jeweiligen Anforderungen anzupassen.

Das Dichtelement eignet sich insbesondere zur Abdichtung von Kolben in Kraftstoff-Hochdruckpumpen oder Kolbenpumpen für Bremssysteme (ABS, ESP, etc.).

Als thermoplastisches Kunststoffmaterial kann ferner insbesondere ein hochtemperaturbeständiges und/oder chemisch beständiges thermoplastisches Material vorgesehen sein, insbesondere PEEK, PEAK, PEI, etc. und/oder ein Compoundmaterial, umfassend ein oder mehrere der vorstehend genannten Materialien.

Insbesondere durch eine Herstellung des Grundkörpers des Dichtelements in einem Spritzgussverfahren kann eine hohe Formbeständigkeit des thermoplastischen Kunststoffmaterials erzielt werden, um letztlich insbesondere höhere Drücke abzudichten.

Der Hochdruckprozess ist insbesondere ein Hochdruckumformprozess.

Der Hochtemperaturprozess ist vorzugsweise ein Hochtemperaturumformprozess und/oder ein Hochtemperaturumwandlungsprozess.

Es kann vorgesehen sein, dass der Hochdruckprozess und/oder der Hochtemperaturprozess der oder die einzigen Prozessschritte zur Herstellung des Grundkörpers sind.

Alternativ hierzu kann vorgesehen sein, dass zur Herstellung des Grundkörpers weitere Prozessschritte durchgeführt werden.

Zur Herstellung eines Grundkörpers eines Dichtelements kann beispielsweise vorgesehen sein, dass das thermoplastische Kunststoffmaterial in einem Extrusionsverfahren, insbesondere RAM-Extrusionsverfahren, vorgefertigt und anschließend durch Schleifen und Fräsen, Drehen oder sonstige spanende Bearbeitung in die endgültige äußere Form gebracht wird.

Ferner kann vorgesehen sein, dass ein Grundkörper eines Dichtelements durch die Durchführung der folgenden Verfahrensschritte hergestellt wird: Extrusion des thermoplastischen Kunststoffmaterials, insbesondere Schmelze-Extrusion des thermoplastischen Kunststoffmaterials; Schleifen; spanende Bearbeitung in einem Drehautomaten; Heißprägen; CNC-Nachbearbeitung, insbesondere zur Herstellung einer Innenkontur, beispielsweise ein oder mehrere radial innere Dichtabschnitte.

Es kann vorgesehen sein, dass ein Grundkörper des Dichtelements durch drehende und/oder spanende Bearbeitung zumindest einen Teil seiner endgültigen äußeren Form oder nur einen Teil seiner endgültigen äußeren Form oder seine vollständige endgültige äußere Form erhält.

Beispielsweise kann vorgesehen sein, dass eine im montierten Zustand des Dichtelements dem beweglichen Bauteil zugewandte Innenseite oder Unterseite des Grundkörpers nach einem Formgebungsschritt nachbearbeitet wird.

Insbesondere kann durch drehende und/oder spanende Bearbeitung eine oder mehrere Dichtkanten und/oder Einbuchtungen ausgebildet und/oder nachgearbeitet werden.

Die drehende und/oder spanende Bearbeitung kann beispielsweise unter Verwendung eines axial und radial verfahrbaren Werkzeugs erfolgen, welches gemäß der zu erzeugenden Innenkontur des Grundkörpers axial und radial an demselben entlanggeführt wird.

Ferner kann vorgesehen sein, dass die drehende und/oder spanende Bearbeitung beispielsweise unter Verwendung eines Werkzeugs erfolgt, welches einen zu der zu erzeugenden Innenkontur des Grundkörpers komplementären Bearbeitungsrand, insbesondere eine Bearbeitungsschneide, umfasst. Das Werkzeug ist vorzugsweise in radialer Richtung von innen nach außen an den Grundkörper heranführbar, insbesondere derart, dass ohne axiale Bewegung in einem Bearbeitungsschritt die gewünschte Innenkontur fertiggestellt wird.

Bei einer weiteren Ausgestaltung kann vorgesehen sein, dass ein Grundkörper des Dichtelements hergestellt wird durch Durchführung der folgenden Verfahrensschritte: Pressen eines Rohlings; Durchführen eines Sintervorgangs; Heißprägen; CNC-Bearbeitung, insbesondere zur Herstellung einer Innenkontur, beispielsweise eines oder mehrerer radial innerer Dichtabschnitte.

Ein Grundkörper eines Dichtelements kann ferner beispielsweise durch Durchführung der folgenden Verfahrensschritte herstellt werden: Pressen eines Rohlings; Durchführen eines Sinterprozesses; CNC-Bearbeitung des Grundkörpers, insbesondere zur Herstellung einer Außenkontur und/oder einer Innenkontur, beispielsweise zur Herstellung eines oder mehrerer radial innerer Dichtabschnitte und/oder eines oder mehrerer radial äußerer Dichtabschnitte.

Ein Grundkörper eines Dichtelements kann ferner durch Durchführung der folgenden Verfahrensschritte herstellt werden: Granulieren eines Ausgangsstoffs; Verwendung dieses Ausgangsstoffs in einem Spritzgussverfahren zur Herstellung des Grundkörpers; ggfs. Nachbearbeitung des Grundkörpers, insbesondere CNC-Bearbeitung zur Herstellung einer Innenkontur, beispielsweise eines oder mehrerer radial innerer Dichtabschnitte.

Ein fertiggestellter Grundkörper kann ggfs. mit weiteren Bauteilen des Dichtelements verbunden oder montiert und schließlich verpackt werden.

Die Geometrie der Dichtlippen hat entscheidenden Einfluss auf die Dichtheit und die Dauerhaltbarkeit des Dichtelements. Folglich ist die Wahl der optimalen Geometrie eine der wesentlichen Herausforderungen bei der Herstellung eines Dichtelements.

Beispielsweise resultieren die Lippengeometrie mit einer bevorzugten Lippendicke und einem bevorzugten Lippenanstellwinkel zusammen mit einer Federkraft und einer Überdeckung des Dichtungsprofils gegenüber einem Durchmesser des beweglichen Bauteils (insbesondere Kolbenstangendurchmesser) in der für die dynamische Dichtheit sehr wichtigen Radialkraft. Mit dieser Radialkraft lasten die dynamischen Dichtlippen mit ihren Dichtkanten auf dem beweglichen Bauteil.

Diese Radialkraft ist entscheidend für die Einstellung der Flächenpressungsverteilung in den Dichtbereichen und hat ebenso entscheidenden Einfluss auf die Standzeit eines solchen Dichtelements. Zu hohe Radialkräfte führen zu erhöhtem Verschleiß des Dichtelements und entsprechend frühem Ausfall desselben. Zu geringe Radialkräfte hingegen führen zu mangelhafter Dichtheit des Dichtelements.

Eine optimale Einstellung der Radialkraft resultiert in einer Flächenpressungsverteilung im Bereich der Dichtkanten, welche eine bestmögliche Rückförderung des ausgeschleppten Schmierfilms erlaubt. Diese Flächenpressungsverteilung hängt ab von der Geometrie der Dichtlippe als Ganzes, von der Geometrie der Dichtkanten, von der Geometrie und den Federeigenschaften des Federelements und von den zeitlichen Veränderungen der Geometrien und der Federeigenschaften, hervorgerufen durch Verschleiß und Deformation des Dichtelements.

Eine weitere Herausforderung stellt die Entformung einer doppeltwirkenden Dichtung beim Spritzgussverfahren dar, wenn dieses Formgebungsverfahren zur Herstellung zumindest eines Abschnitts des Dichtelements gewählt wird. Optimal ausgestaltete Dichtlippen und Dichtkantengeometrien würden während des Entformens des inneren Kerns bei der in der Form herrschenden Temperatur stark deformiert. Aus diesem Grund muss die innere Geometrie der Dichtlippe/Dichtkanten verändert werden, so dass die Entformung ohne zu starke Beschädigung der Dichtkanten erfolgen kann. Hierfür haben sich mehrere Maßnahmen als vorteilhaft erwiesen. Insbesondere hat eine Finite Elemente Simulation des Entformungsprozesses an früheren Geometrien zu erstaunlichen Erkenntnissen geführt.

Überraschenderweise hat sich herausgestellt, dass die Verteilung der Radialkräfte auf die Dichtkanten während des Entformens wichtig ist.

Sämtliche Angaben in dieser Beschreibung orientieren sich zur einfacheren Beschreibung der Geometrie des Dichtelements vorzugsweise an einem Querschnitt des Dichtelements in einer durch die Symmetrieachse verlaufenden Ebene. Eventuelle eindimensionale und/oder punktbezogene Angaben ergeben bei Interpolation auf das gesamte Dichtelement folglich Linien oder Kurven, insbesondere ringförmige Kurven. Eventuelle zweidimensionale und/oder linienbezogene oder kurvenbezogene Angaben ergeben bei Interpolation auf das gesamte Dichtelement folglich Flächen, insbesondere ringförmige Flächen. Eventuelle zweidimensionale und/oder flächenbezogene Angaben ergeben bei Interpolation auf das gesamte Dichtelement folglich Räume, insbesondere ringförmige Räume.

Vorteilhaft ist es beispielsweise, wenn ein Abstand zwischen einer Dichtkante und einer sich in axialer Richtung nach innen gerichtet an diese Dichtkante anschließenden Vertiefung für jede Dichtkante zumindest näherungsweise gleich groß ist.

Ein Abstand ist in dieser Beschreibung und den beigefügten Ansprüchen insbesondere
(i) ein Abstand längs einer parallel zu einer der mindestens einen Dichtkante abgewandten Oberseite oder Oberfläche der Dichtlippe verlaufenden Richtung oder
(ii) ein Abstand längs einer senkrecht zu einer der mindestens einen Dichtkante abgewandten Oberseite oder Oberfläche der Dichtlippe verlaufenden Richtung oder
(iii) ein Abstand längs einer parallel zur Symmetrieachse des Dichtelements verlaufenden Richtung, d.h. ein Abstand in axialer Richtung, oder
(iv) ein Abstand längs einer senkrecht zur Symmetrieachse des Dichtelements verlaufenden Richtung, d.h. ein Abstand in radialer Richtung.

Eine Vertiefung ist in dieser Beschreibung und den beigefügten Ansprüchen insbesondere
(i) eine Stelle einer Einbuchtung in der Dichtlippe, welche bezogen auf die radiale Richtung lokal einen maximalen Abstand von der Symmetrieachse aufweist, oder (ii) eine Stelle einer Einbuchtung in der Dichtlippe, welche, insbesondere bezogen auf eine Dickenrichtung der Dichtlippe, lokal einen minimalen Abstand von einer Oberseite oder Oberfläche der Dichtlippe aufweist, oder
(iii) die Einbuchtung als Ganzes.

Beispielsweise kann ein Abstand zwischen einer in axialer Richtung äußeren Dichtkante und einer sich in axialer Richtung nach innen gerichtet an diese Dichtkante anschließenden Vertiefung mindestens ungefähr 0,5 mm, vorzugsweise mindestens ungefähr 0,6 mm, betragen.

Ferner kann ein Abstand zwischen einer in axialer Richtung äußeren Dichtkante und einer sich in axialer Richtung nach innen gerichtet an diese Dichtkante anschließenden Vertiefung höchstens ungefähr 1,5 mm, vorzugsweise höchstens ungefähr 1,0 mm, insbesondere höchstens ungefähr 0,9 mm, beispielsweise ungefähr 0,8 mm, betragen.

Beispielsweise kann ein Abstand zwischen einer in axialer Richtung inneren Dichtkante und einer sich in axialer Richtung nach innen gerichtet an diese Dichtkante anschließenden Vertiefung mindestens ungefähr 0,5 mm, vorzugsweise mindestens ungefähr 0,6 mm, betragen.

Ferner kann ein Abstand zwischen einer in axialer Richtung inneren Dichtkante und einer sich in axialer Richtung nach innen gerichtet an diese Dichtkante anschließenden Vertiefung höchstens ungefähr 2,5 mm, vorzugsweise höchstens ungefähr 1,0 mm, insbesondere höchstens ungefähr 0,9 mm, beispielsweise ungefähr 0,8 mm, betragen.

Die sich in axialer Richtung nach innen gerichtet an eine Dichtkante anschließende Vertiefung ist insbesondere ein bei einer Entformung des Dichtelements aus einem Spritzgusswerkzeug wirksamer Hinterschnitt.

Ein Abstand zwischen einer Dichtkante und einer sich in axialer Richtung nach innen gerichtet an diese Dichtkante anschließenden Vertiefung ist insbesondere eine Flankenlänge der Dichtkante.

Beispielsweise weichen die Flankenlängen benachbarter Dichtkanten einer Dichtlippe oder aller Dichtlippen um höchstens ungefähr 15 %, vorzugsweise höchstens ungefähr 5 %, voneinander ab.

Günstig kann es sein, wenn eine Flankenlänge der in axialer Richtung inneren Dichtkante kleiner ist als eine Flankenlänge der in axialer Richtung äußeren Dichtkante, beispielsweise um mindestens ungefähr 0,05 mm, insbesondere mindestens ungefähr 0,1 mm, und/oder um höchstens ungefähr 0,2 mm, insbesondere höchstens ungefähr 0,15 mm. Auf diese Weise kann die Radialkraft beispielsweise beim Entformen des Dichtelements zeitweise stärker auf der primären Dichtkante lasten. Die primäre Dichtkante ist in axialer Richtung weiter außen angeordnet und flexibler als die in axialer Richtung innere sekundäre Dichtkante. Trotz der zeitweise stärkeren Belastung ist die primäre Dichtkante daher vorzugsweise nicht so sehr gefährdet, plastisch verformt zu werden.

Ferner kann vorgesehen sein, dass eine Flankenlänge der in axialer Richtung äußeren Dichtkante kleiner ist als eine Flankenlänge der in axialer Richtung inneren Dichtkante, beispielsweise um mindestens ungefähr 0,05 mm, insbesondere mindestens ungefähr 0,1 mm, und/oder um höchstens ungefähr 0,2 mm, insbesondere höchstens ungefähr 0,15 mm.

Ein Dichtkantenwinkel, welcher einerseits von einer sich in axialer Richtung nach innen gerichtet an eine Dichtkante anschließende Flanke der Dichtkante und andererseits von einer Symmetrieachse des Dichtelements eingeschlossen wird, ist vorzugsweise für jede Dichtkante zumindest näherungsweise gleich groß.

Vorzugsweise weichen die Dichtkantenwinkel benachbarter Dichtkanten einer Dichtlippe oder aller Dichtlippen um höchstens ungefähr 15 %, vorzugsweise höchstens ungefähr 5 %, voneinander ab.

Eine in axialer Richtung äußere Dichtkante ist vorzugsweise eine primäre Dichtkante.

Eine in axialer Richtung innere Dichtkante ist vorzugsweise eine sekundäre Dichtkante, insbesondere dann, wenn keine weitere Dichtkante zwischen der äußeren Dichtkante und der inneren Dichtkante angeordnet ist.

Durch geeignete Wahl der Flankenlängen und/oder der Dichtkantenwinkel wird die radiale Last, welche auf den beiden Dichtkanten liegt, während des Entformens vorzugsweise gleichmäßig und zeitlich länger auf beide Dichtkanten verteilt. Beide Dichtkanten werden dadurch beim Entformen vorzugsweise simultan angehoben und wieder abgesenkt.

Ein Durchmesser des beweglichen Bauteils beträgt vorzugsweise mindestens ungefähr 4 mm, beispielsweise mindestens ungefähr 5 mm, und/oder höchstens ungefähr 18 mm, beispielsweise höchstens ungefähr 13 mm.

Das bewegliche Bauteil ist insbesondere eine Kolbenstange.

Es hat sich überraschenderweise gezeigt, dass kleinere Radien an den Dichtkanten empfindlicher gegenüber einer Zwangsentformung sind als größere Radien. Größere Radien sind entsprechend einfacher zu entformen als kleinere Radien. Durch die Entformung erfahren die Dichtkanten eine gewisse plastische Verformung, da die beim Entformen herrschende Temperatur hoch ist und der Werkstoff bei dieser Temperatur oftmals nicht die für die vollständige Formerhaltung ausreichende hohe Festigkeit aufweist. Die Radien können dann durch plastische Verformung verzerrt werden.

Eine zuverlässige Dichtwirkung mit zugleich gutem Entformungsverhalten hat sich insbesondere dann ergeben, wenn folgende Parameter eingehalten werden:
Vorzugsweise beträgt ein Dichtkantenradius einer in axialer Richtung inneren Dichtkante mindestens ungefähr 0,1 mm, insbesondere mindestens ungefähr 0,15 mm, beispielsweise ungefähr 0,2 mm.

Vorzugsweise beträgt ein Dichtkantenradius einer in axialer Richtung inneren Dichtkante höchstens ungefähr 0,5 mm, insbesondere höchstens ungefähr 0,25 mm.

Vorzugsweise beträgt ein Dichtkantenradius einer in axialer Richtung äußeren Dichtkante mindestens ungefähr 0,1 mm, insbesondere mindestens ungefähr 0,15 mm, beispielsweise ungefähr 0,2 mm.

Vorzugsweise beträgt ein Dichtkantenradius einer in axialer Richtung äußeren Dichtkante höchstens ungefähr 0,5 mm, insbesondere höchstens ungefähr 0,25 mm.

Vorzugsweise beträgt ein Krümmungsradius einer in axialer Richtung inneren Einbuchtung mindestens ungefähr 0,1 mm, insbesondere mindestens ungefähr 0,15 mm, beispielsweise ungefähr 0,2 mm.

Vorzugsweise beträgt ein Krümmungsradius einer in axialer Richtung äußeren Einbuchtung (zwischen zwei Dichtkanten) höchstens ungefähr 0,3 mm, insbesondere höchstens ungefähr 0,25 mm.

Die in Dichtsystemen von Kraftstoffpumpen bewährten Dichtlippengeometrien können sich als zu stabil und/oder zu steif erweisen, um gut entformt werden zu können, insbesondere bei der Verwendung von spritzgießbaren Fluorthermoplasten aufgrund der im Vergleich zu PTFE-basierten Werkstoffen höheren Steifigkeit.

Als vorteilhaft hat es sich herausgestellt, wenn eine Dichtlippendicke an einer schmalsten Stelle auf einer Innenseite einer in axialer Richtung inneren Dichtkante mindestens ungefähr 0,4 mm, vorzugsweise mindestens ungefähr 0,5 mm, beispielsweise ungefähr 0,6 mm, beträgt.

Ferner kann vorgesehen sein, dass eine Dichtlippendicke an einer schmalsten Stelle auf einer Innenseite einer in axialer Richtung inneren Dichtkante höchstens ungefähr 1,0 mm, vorzugsweise höchstens ungefähr 0,7 mm, beträgt.

Günstig kann es sein, wenn eine Dichtlippendicke an einer schmalsten Stelle zwischen einer in axialer Richtung inneren Dichtkante und einer in axialer Richtung äußeren Dichtkante mindestens ungefähr 0,3 mm, vorzugsweise mindestens ungefähr 0,4 mm, beispielsweise ungefähr 0,5 mm, beträgt.

Ferner kann vorgesehen sein, dass eine Dichtlippendicke an einer schmalsten Stelle zwischen einer in axialer Richtung inneren Dichtkante und einer in axialer Richtung äußeren Dichtkante höchstens ungefähr 0,9 mm, vorzugsweise höchstens ungefähr 0,6 mm, beträgt.

Es hat sich herausgestellt, dass insbesondere bei der Verwendung des bevorzugten Werkstoffs (Materials) aufgrund der höheren Steifigkeit und Festigkeit die beschriebenen Dicken ausreichen können, um beispielsweise die im Betrieb herrschenden Drücke einer Kraftstoffpumpe sicher abdichten zu können. Zudem können die beschriebenen Dicken erforderlich sein, um das Dichtelement beschädigungsfrei entformen zu können.

Ein Dichtlippenwinkel ist vorzugsweise ein Winkel, welcher einerseits von einer der mindestens einen Dichtkante abgewandten Oberfläche oder Oberseite einer Dichtlippe und andererseits von der Symmetrieachse eingeschlossen wird.

In einem fertiggestellten Zustand des Grundkörpers, in welchem dieser insbesondere zur Aufnahme und/oder Festlegung eines oder mehrerer, insbesondere zweier, Federelemente bereit ist, beträgt ein Dichtlippenwinkel einer oder beider Dichtlippen beispielsweise mindestens ungefähr 2°, vorzugsweise mindestens ungefähr 3°, insbesondere ungefähr 5°.

In einem fertiggestellten Zustand des Grundkörpers, in welchem dieser insbesondere zur Aufnahme und/oder Festlegung eines oder mehrerer, insbesondere zweier, Federelemente bereit ist, beträgt ein Dichtlippenwinkel einer oder beider Dichtlippen beispielsweise höchstens ungefähr 12°, vorzugsweise höchstens ungefähr 10°, insbesondere ungefähr 8°.

Auf den fertiggestellten Zustand des Grundkörpers, in welchem dieser insbesondere zur Aufnahme und/oder Festlegung eines oder mehrerer, insbesondere zweier, Federelemente bereit ist, folgt vorzugsweise nach der Aufnahme und/oder Festlegung des einen oder der mehreren, insbesondere der zwei, Federelemente, ein montagebereiter Zustand des Dichtelements, in welchem das Dichtelement fertiggestellt und zum Einbau in eine Vorrichtung vorbereitet ist.

Im montagebereiten Zustand des Dichtelements ist insbesondere aufgrund der Wirkung des Federelements ein Dichtlippenwinkel vorzugsweise um mindestens ungefähr 1°, beispielsweise mindestens ungefähr 2°, insbesondere ungefähr 3°, größer als im fertiggestellten Zustand des Grundkörpers.

Im montagebereiten Zustand des Dichtelements ist insbesondere aufgrund der Wirkung des Federelements ein Dichtlippenwinkel vorzugsweise um höchstens ungefähr 10°, beispielsweise höchstens ungefähr 6°, insbesondere ungefähr 3°, größer als im fertiggestellten Zustand des Grundkörpers.

Eine Verringerung des Dichtlippenwinkels verringert die Radialkraft beim Entformen, da durch die Geradestellung der Dichtlippe ein geringerer Hinterschnitt zwischen Formgebungsvorrichtung und Dichtelement erreicht wird. Verändert man den Winkel auf 0° (Innenkontur der Dichtlippe parallel zur Achse; die der mindestens einen Dichtkante abgewandte Oberfläche oder Oberseite einer Dichtlippe ist parallel zur Symmetrieachse) so ist die Überdeckung des Dichtelements mit dem beweglichen Bauteil geringer, die Radialkraft bei gleichem Federelement ebenfalls.

Wenn der Grundkörper beispielsweise in einem ersten Schritt, insbesondere in einem Spritzgießschritt, eine erste Form erhält, bei welcher der Dichtlippenwinkel ca. 3° oder weniger beträgt, kann es erforderlich sein, den Grundkörper nachzubehandeln.

Ein Nachbehandeln der Dichtlippe (auch Kalibrieren der Dichtlippe genannt) kann, beispielsweise nach dem Spritzgießschritt, erforderlich sein, insbesondere um eine erforderliche Überdeckung und/oder Anpresswirkung der Dichtlippen bzw. Dichtkanten mit oder an dem beweglichen Bauteil zu erreichen.

Ein solches Nachbehandeln kann kalt oder auch bevorzugt bei einer erhöhten Temperatur durchgeführt werden, insbesondere um einem Formgedächtniseffekt beispielsweise bei der Verwendung von Fluorpolymeren entgegenzuwirken.

Insbesondere bei der Verwendung des Dichtelements als Kraftstoffpumpendichtung weisen die Dichtlippen vorzugsweise jeweils zwei oder mehr Dichtkanten auf.

Zwischen den Dichtkanten sind vorzugsweise Vertiefungen eingebracht, die die Schmierung des Dichtelements begünstigen sollen.

Diese Vertiefungen dienen somit vorzugsweise als Schmiermitteldepots und sollten ausreichend Volumen aufnehmen können, um die Schmierung aufrechterhalten zu können und/oder um bei kurzzeitig höheren Leckagen eine gewisse Menge Kraftstoff oder Motoröl vorübergehend speichern zu können.

Tiefe Vertiefungen bieten einen größeren Depotraum, können jedoch auch eine Entformung behindern, wenn das Dichtelement beispielsweise in einem Spritzgießprozess hergestellt wird.

Insbesondere können tiefe Vertiefungen zu starker plastischer Deformation der Dichtkanten beim Entformen führen.

Die Tiefe einer Vertiefung ist vorzugsweise ein Höhenunterschied zwischen einer Dichtkante und einer sich in axialer Richtung nach innen gerichtet an diese Dichtkante anschließenden Vertiefung.

Der Höhenunterschied ist dabei insbesondere ein Abstand längs einer senkrecht zu einer der mindestens einen Dichtkante abgewandten Oberseite oder Oberfläche der Dichtlippe verlaufenden Richtung.

Vorteilhaft kann es sein, wenn ein Höhenunterschied zwischen einer Dichtkante und einer sich in axialer Richtung nach innen gerichtet an diese Dichtkante anschließenden Vertiefung mindestens ungefähr 0,1 mm, vorzugsweise mindestens ungefähr 0,15 mm, beispielsweise mindestens ungefähr 0,2 mm, beträgt.

Günstig kann es ferner sein, wenn ein Höhenunterschied zwischen einer Dichtkante und einer sich in axialer Richtung nach innen gerichtet an diese Dichtkante anschließenden Vertiefung höchstens ungefähr 0,4 mm, vorzugsweise höchstens ungefähr 0,3 mm, beispielsweise höchstens ungefähr 0,25 mm, beträgt.

Der Höhenunterschied kann auch als Depottiefe bezeichnet werden.

Sämtliche beschriebenen Merkmale und Vorteile einer Dichtlippe oder Dichtkante können sich sowohl auf die Dichtlippe(n) und/der Dichtkante(n) des statischen Dichtabschnitts als auch auf die Dichtlippe(n) und/der Dichtkante(n) des dynamischen Dichtabschnitts beziehen.

Vorzugsweise sind die Dichtlippen des statischen Dichtabschnitts bezüglich einer senkrecht zur Symmetrieachse verlaufenden Quermittelebene spiegelsymmetrisch zueinander ausgebildet.

Vorzugsweise sind die Dichtlippen des dynamischen Dichtabschnitts bezüglich einer senkrecht zur Symmetrieachse verlaufenden Quermittelebene spiegelsymmetrisch zueinander ausgebildet.

Die Dichtlippen der dynamischen Dichtabschnitte wirken vorzugsweise in einander entgegengesetzte Richtungen.

Sämtliche Dichtkanten beider Dichtlippen der dynamischen Dichtabschnitte ragen und/oder wirken vorzugsweise in radialer Richtung nach innen gerichtet.

Das Dichtelement ist insbesondere ein doppeltwirkendes Dichtelement.

Das thermoplastische Kunststoffmaterial ist vorzugsweise wie folgt herstellbar oder hergestellt:
Günstig kann es sein, wenn das thermoplastische Kunststoffmaterial ein Compoundmaterial ist, welches insbesondere mittels einer Compoundieranlage herstellbar oder hergestellt ist.

Die Compoundieranlage umfasst vorzugsweise einen Extruder, insbesondere einen Schneckenextruder, beispielsweise einen Doppelschneckenextruder.

Zur Gewährleistung der gewünschten Werkstoffparameter müssen die insbesondere eine Schneckendrehzahl, eine Schneckengeometrie, eine Mischungsverhältnis der Ausgangsstoffe und ein Temperaturverlauf genau gesteuert und/oder geregelt werden.

Zur Herstellung des thermoplastischen Kunststoffmaterials werden vorzugsweise einzelne oder mehrere der folgenden Verarbeitungsbedingungen, insbesondere sämtliche der folgenden Verarbeitungsbedingungen, eingehalten:

| **Parameter** | **Einheit** | **Wert** |
|---|---|---|
| Rohstoff 1 - Fluorpolymer | % | 94 |
| Rohstoff 2 - Kohlefaser | % | 4 |
| Rohstoff 3 - Graphit | % | 2 |
| Schneckendurchmesser | mm | 25 |
| Verhältnis von Länge zu Durchmesser | - | 42 |
| Temperaturen in den aufeinanderfolgenden Zonen der Plastifiziereinheit: | | |
| C1 | °C | 80 ± 20 |
| C2 | °C | 340 ± 20 |
| C3 | °C | 360 ± 20 |
| C4 | °C | 365 ± 20 |
| C5 | °C | 350 ± 20 |
| C6 | °C | 340 ± 20 |
| Schneckendrehzahl | U/min | 180 ± 40 |
| Massedruck | bar | 12 ± 6 |
| Massetemperatur (Temperatur am Austritt des Extruders) | °C | 360 ± 20 |
| Massedurchsatz | kg/h | 15 ± 5 |
| Abzugsgeschwindigkeit | m/min | 15 ± 5 |

Das Material "Kohlefaser" ist insbesondere Kohlenstofffaser.

Günstig kann es sein, wenn ein Fluorpolymeranteil des thermoplastischen Kunststoffmaterials hinsichtlich seiner Masse und/oder seines Volumens mindestens ungefähr 85%, vorzugsweise mindestens ungefähr 90%, beispielsweise ungefähr 94%, beträgt.

Ferner kann vorgesehen sein, dass ein Fluorpolymeranteil des thermoplastischen Kunststoffmaterials hinsichtlich seiner Masse und/oder seines Volumens höchstens ungefähr 99% vorzugsweise höchstens ungefähr 96%, beispielsweise ungefähr 94%, beträgt.

Günstig kann es sein, wenn ein Kohlefaseranteil des thermoplastischen Kunststoffmaterials hinsichtlich seiner Masse und/oder seines Volumens mindestens ungefähr 0,5%, vorzugsweise mindestens ungefähr 2%, beispielsweise ungefähr 4%, beträgt.

Ferner kann vorgesehen sein, dass ein Kohlefaseranteil des thermoplastischen Kunststoffmaterials hinsichtlich seiner Masse und/oder seines Volumens höchstens ungefähr 10%, vorzugsweise höchstens ungefähr 6%, beispielsweise ungefähr 4%, beträgt.

Günstig kann es sein, wenn ein Graphitanteil des thermoplastischen Kunststoffmaterials hinsichtlich seiner Masse und/oder seines Volumens mindestens ungefähr 0,5%, vorzugsweise mindestens ungefähr 1,5%, beispielsweise ungefähr 2%, beträgt.

Ferner kann vorgesehen sein, dass ein Graphitanteil des thermoplastischen Kunststoffmaterials hinsichtlich seiner Masse und/oder seines Volumens höchstens ungefähr 6%, vorzugsweise höchstens ungefähr 4%, beispielsweise ungefähr 2%, beträgt.

Das auf die beschrieben Weise erhaltene thermoplastische Kunststoffmaterial wird vorzugsweise zur Herstellung eines oder mehrerer Dichtelemente verwendet.

Das thermoplastische Kunststoffmaterial wird hierzu vorzugsweise unter Einhaltung einzelner oder mehrerer der folgenden Verarbeitungsbedingungen, insbesondere sämtlicher der folgenden Verarbeitungsbedingungen, weiterverarbeitet, insbesondere in einem Spritzgussverfahren in eine gewünschte Form gebracht:

| **Parameter** | | **Einheit** | **Wert** |
|---|---|---|---|
| Werkstoffbezeichnung | | - | VM3050 |
| Schneckendurchmesser | | mm | 25 |
| Temperaturen in den aufeinanderfolgenden Zonen der Plastifiziereinheit: | | | |
| | C1 | °C | 350 ± 20 |
| | C2 | °C | 365 ± 20 |
| | C3 | °C | 370 ± 20 |
| | C4 | °C | 375 ± 20 |
| | C5 | °C | 380 ± 20 |
| Werkzeugtemperatur | | °C | 245 ± 20 |
| Plastifiziervolumen | | cm³ | 15,6 |
| Einspritzgeschwindigkeit | | cm³/s | 30 |
| Einspritzdruck | | bar | 1200 ± 100 |
| Nachdruck | | bar | 160 |
| Nachdruckzeit | | s | 6 |
| Restkühlzeit | | s | 15 |

Die herausragenden Eigenschaften dieses vorliegend als VM3050 bezeichneten thermoplastischen Kunststoffmaterials bei dessen Verwendung zur Herstellung von Dichtelementen sind im Vergleich mit anderen Werkstoffen in nachfolgender Tabelle wiedergegeben:

| **Eigenschaft en** | **Probekörper** | **PTFE-Compound** | **VM3050** | **VM3044** | VM3006 |
|---|---|---|---|---|---|
| Verarbeitung | - | Pressen, Sintern | Thermoplastisch (z.B. spritzgießen) | Thermoplastisch (z.B. spritzgießen) | Thermoplastisch (z.B. spritzgießen) |
| Füllstoffgehalt | - | Kohlefaser: 10% Graphit: 5% | Kohlefaser: 4% Graphit: 2% | PI: 20% | PEEK: 30% Kohlefaser: 10% Graphit: 10% |
| Farbe | - | schwarz | schwarz | gelb | schwarz |
| Verschleiß (Lauffläche) | Dichtung | 0,32 mm | 0,41 mm | 0,69 mm | 0,47 mm |
| Leckage | Dichtung | 4 mm³/min | 0,9 mm³/min | 150 mm³/min | 500 mm³/min |
| Radialkraft | Dichtung | 120 ± 10 N | 220 ± 10 N | 70 ± 10 N | 90 ± 10 N |
| (original) | ohne Feder | | | | |
| Radialkraft nach Temperaturlagerung | Dichtung ohne Feder | 90 ± 10 N | 130 ± 10 N | 40 ± 10 N | 80 ± 10 N |
| Radialkraft (original) | Dichtung mit Feder | 190 ± 10 N | 250 ± 10 N | 125 ± 10 N | 130 ± 10 N |
| Radialkraft nach Temperaturlagerung | Dichtung mit Feder | 155 ± 10 N | 170 ± 10 N | 100 ± 10 N | 125 ± 10 N |

Die Begriffe "ungefähr" oder "näherungsweise" bezeichnen vorzugsweise eine maximale Abweichung von höchstens 10%, insbesondere höchstens 5%, beispielsweise höchstens 1%, des spezifizierten Wertes.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen Längsschnitt durch einen Grundkörper eines Dichtelements, wobei der Grundkörper nur teilweise seine endgültige äußere Form aufweist;
- Fig. 2: eine der Fig. 1 entsprechende schematische Darstellung des Grundkörpers, wobei der Grundkörper zur Fertigstellung einer Außenkontur bearbeitet wurde;
- Fig. 3: eine der Fig. 1 entsprechende schematische Darstellung eines Dichtelements, welches den fertiggestellten Grundkörper und zwei Federelemente umfasst;
- Fig. 4: einen schematischen Längsschnitt durch eine Dichtlippe eines Dichtelements, bei welchem ein Mittelabschnitt mit einem Führungsabschnitt versehen ist;
- Fig. 5: eine der Fig. 4 entsprechende Darstellung einer Dichtlippe eines Dichtelements, wobei das Dichtelement keinen Führungsabschnitt umfasst;
- Fig. 6: eine der Fig. 4 entsprechende Darstellung einer Dichtlippe zur Illustration von Radien der der Dichtkanten der Dichtlippe sowie von Radien von Vertiefungen in der Dichtlippe;
- Fig. 7: eine der Fig. 4 entsprechende Darstellung einer Dichtlippe zur Illustration einer Dichtlippendicke;
- Fig. 8: eine der Fig. 4 entsprechende Darstellung einer Dichtlippe zur Illustration eines Dichtlippenwinkels; und
- Fig. 9: eine der Fig. 4 entsprechende Darstellung einer Dichtlippe zur Illustration von Hinterschnitttiefen und einer Depottiefe eines Depots der Dichtlippe.

Gleiche oder funktional äquivalente Elemente sind in sämtlichen Figuren mit denselben Bezugszeichen versehen.

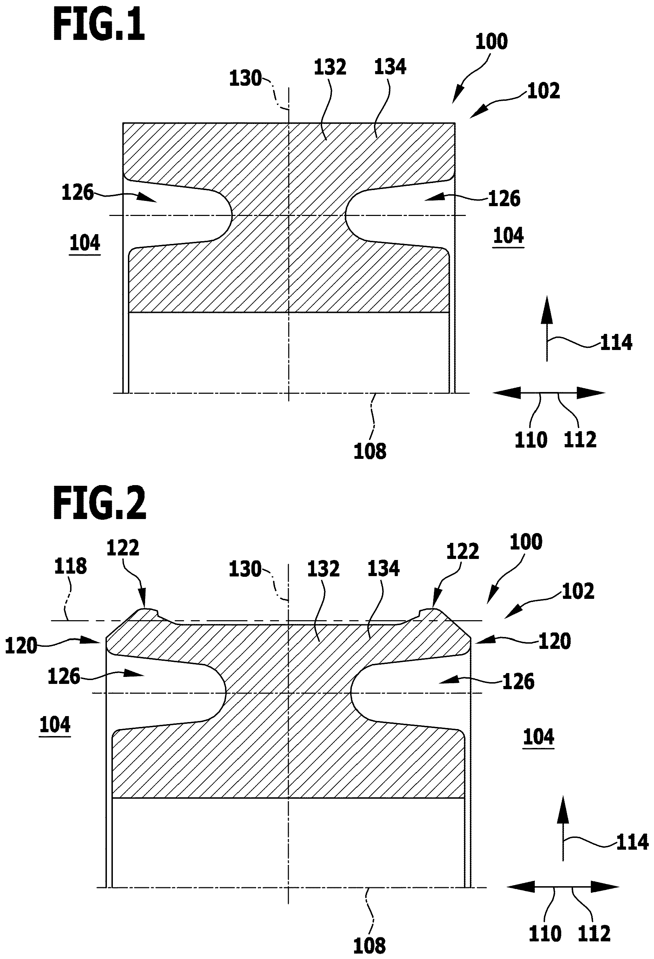

Eine in den Fig. 1 bis 3 dargestellte Ausführungsform eines als Ganzes mit 100 bezeichneten Dichtelements ist beispielsweise Bestandteil einer Hochdruckpumpe 102 und dient der Abdichtung zwischen zwei Medienräumen 104 im Bereich eines beweglichen Bauteils 106.

Das bewegliche Bauteil 106 kann beispielsweise ein Kolben der Hochdruckpumpe 102 sein.

Das bewegliche Bauteil 106 ist insbesondere durch das Dichtelement 100 hindurchgeführt.

Sowohl das bewegliche Bauteil 106 als auch das Dichtelement 100 sind dabei vorzugsweise rotationssymmetrisch um eine Symmetrieachse 108 ausgebildet.

Die Symmetrieachse 108 ist insbesondere parallel zu einer Längsachse 110 des beweglichen Bauteils 106 und des Dichtelements 100 ausgerichtet.

Das Dichtelement 100 und das bewegliche Bauteil 106 weisen im montierten Zustand eine gemeinsame Symmetrieachse 108 auf.

Die Längsachse 110 definiert vorzugsweise eine axiale Richtung 112.

Eine senkrecht zur axialen Richtung 112 ausgerichtete Richtung ist eine radiale Richtung 114.

Mittels des Dichtelements 100 sind vorzugsweise die Medienräume 104 in axialer Richtung 112 voneinander getrennt.

Das Dichtelement 100 grenzt vorzugsweise in radialer Richtung 114 nach innen gerichtet mittels zweier dynamischer Dichtabschnitte 116 an das bewegliche Bauteil 106 an.

In radialer Richtung 114 nach außen gerichtet grenzt das Dichtelement 100 an ein Gehäuse 118 der Hochdruckpumpe 102 an.

Das Dichtelement 100 ist im montierten Zustand desselben relativ zu dem Gehäuse 118 festgelegt.

Zwei den beiden Medienräumen 104 zugeordnete Abdichtbereiche 120 des Dichtelements 100 umfassen somit zusätzlich zu den dynamischen Dichtabschnitten 116 noch zwei an dem Gehäuse 118 anliegende statische Dichtabschnitte 122.

Die dynamischen Dichtabschnitte 116 dienen der dynamischen Abdichtung zwischen dem Dichtelement 100 und dem sich relativ zu dem Dichtelement 100 bewegenden, insbesondere längs der axialen Richtung 112 verschieblichen, Bauteil 106.

Zur Erzielung einer erhöhten Dichtwirkung können ein oder mehrere Federelemente 124 des Dichtelements 100 vorgesehen sein.

Das eine oder die mehreren Federelemente 124 sind insbesondere in einer oder mehreren Federelementaufnahmen 126 anordenbar oder angeordnet.

Mittels des einen oder der mehreren Federelemente 124 sind insbesondere ein oder mehrere dynamische Dichtabschnitte 116 an das bewegliche Bauteil 106 anpressbar.

Alternativ oder ergänzend hierzu kann vorgesehen sein, dass mittels des einen oder der mehreren Federelemente 124 ein oder mehrere statische Dichtabschnitte 122 an ein Gehäuse 118 der Hochdruckpumpe 102 anpressbar sind.

Ein Federelement 124 ist insbesondere ringförmig, beispielsweise kreisringförmig, ausgebildet und weist beispielsweise einen V-förmigen oder U-förmigen Querschnitt auf.

Jeder dynamische Dichtabschnitt 116 umfasst vorzugsweise eine Dichtlippe 127 mit jeweils einer, zwei oder mehr als zwei Dichtkanten 128.

Jede Dichtlippe 127 und/oder jede Dichtkante 128 ist vorzugsweise im Wesentlichen ringförmig und im Wesentlichen rotationssymmetrisch um die Symmetrieachse 108 ausgebildet.

Die Dichtkanten 128 einer jeden Dichtlippe 127 sind dabei vorzugsweise in unterschiedlichen Abständen von einer senkrecht zur Längsachse 110 des Dichtelements 100 verlaufenden Quermittelebene 130 des Dichtelements 100 angeordnet.

Das Dichtelement 100 umfasst insbesondere einen Grundkörper 132, welcher vorzugsweise einstückig aus einem thermoplastischen Kunststoffmaterial gebildet ist.

Der Grundkörper 132 umfasst insbesondere einen oder mehrere dynamische Dichtabschnitte 116, einen oder mehrere statische Dichtabschnitte 122 und eine oder mehrere Federelementaufnahmen 126.

Der Grundkörper 132 kann beispielsweise wie folgt hergestellt werden:
Beispielsweise kann ein Rohling 134 des Grundkörpers 132 in einem Spritzgussverfahren hergestellt werden.

Der Rohling 134 des Grundkörpers 132 weist dabei lediglich abschnittsweise seine endgültige äußere Form auf.

Insbesondere sind lediglich die Federelementaufnahmen 126 bei der Herstellung des Rohlings 134 fertiggestellt.

Die Dichtabschnitte 116, 122 hingegen müssen zur Fertigstellung des Grundkörpers 132 nachbearbeitet werden, insbesondere durch spanende Bearbeitung, beispielsweise CNC-Bearbeitung.

Wie insbesondere aus dem Vergleich der Fig. 1 bis 3 hervorgeht, kann dabei beispielsweise zunächst eine Außenkontur bearbeitet werden, um die radial äußeren statischen Dichtabschnitte 122 fertigzustellen. Anschließend kann dann eine radial innere Bearbeitung zur Fertigstellung der dynamischen Dichtabschnitte 116 erfolgen.

Alternativ hierzu kann vorgesehen sein, dass der Rohling 134 beispielsweise in einem Spritzgussverfahren derart hergestellt wird, dass sowohl die statischen Dichtabschnitte 122 als auch die Federelementaufnahmen 126 nach der Durchführung des Spritzgussprozesses bereits die endgültige äußere Form aufweisen.

Lediglich der radial innere Bereich muss dann noch mechanisch nachbearbeitet werden, um die dynamischen Dichtabschnitte 116 fertigzustellen.

Insbesondere durch eine Kombination der Herstellung des Rohlings 134 in einem Hochdruckprozess und/oder einem Hochtemperaturprozess, beispielsweise einem Spritzgussprozess, einerseits und der nur teilweisen nachträglichen Bearbeitung zur Fertigstellung des Grundkörpers 132 andererseits kann der Grundkörper 132 und somit das gesamte Dichtelement 100 besonders effizient und kostengünstig hergestellt werden.

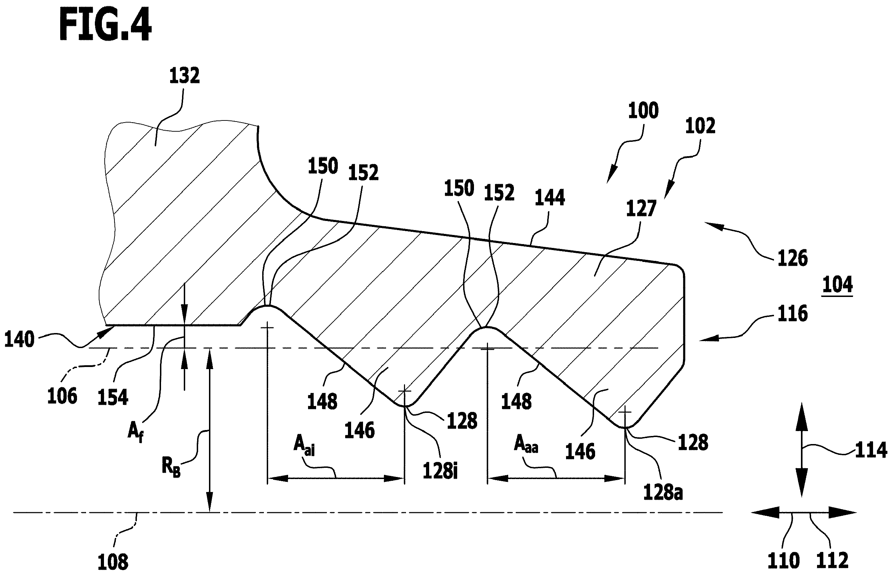

In Fig. 4 ist eine vergrößerte Schnittdarstellung einer Dichtlippe 127 eines dynamischen Dichtabschnitts 116 einer alternativen Ausführungsform eines Dichtelements 100 dargestellt.

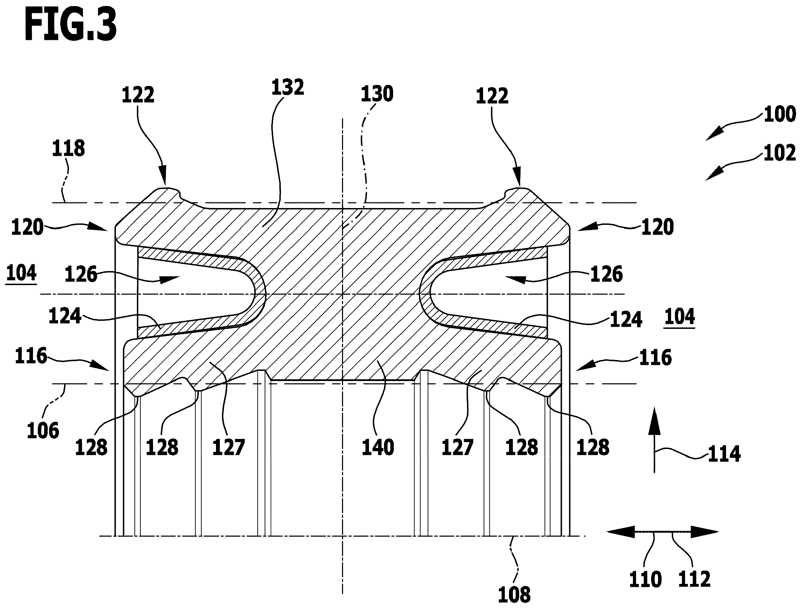

Die Dichtlippe 127 dieses Dichtelements 100 unterscheidet sich von der Dichtlippe 127 der in Fig. 3 dargestellten Ausführungsform des Dichtelements 100 im Wesentlichen durch seine Geometrie.

Zur näheren Erläuterung der Geometrie der Dichtlippe 127 werden zunächst die einzelnen Bestandteile und Bereich der Dichtlippe 127 näher erläutert:
Die Dichtlippe 127 ist durch einen von einem Mittelabschnitt 140 des Grundkörpers 132 leicht schräg zur axialen Richtung 112 verlaufender und geringfügig in radialer Richtung 114 nach innen ragender Abschnitt des Grundkörpers 132. Die Dichtlippe 127 umfasst dabei eine im montierten Zustand des Dichtelements 100 dem beweglichen Bauteil 106 zugewandte Unterseite 142 sowie eine im montierten Zustand des Dichtelements 100 dem beweglichen Bauteil 106 abgewandte Oberseite 144.

Die Oberseite 144 ist im Querschnitt im Wesentlichen eben ausgebildet. Bei dreidimensionaler Betrachtung des Dichtelements 100 weist die Oberseite 144 insbesondere eine Kegelstumpfmantelform auf.

An der Unterseite 142 der Dichtlippe 127 sind ein oder mehrere, beispielsweise zwei, Vorsprünge 146 vorgesehen.

Diese Vorsprünge 146 bilden an ihren in radialer Richtung 114 nach innen ragenden Enden die Dichtkanten 128 der Dichtlippe 127.

In axialer Richtung 112 nach innen, das heißt in Richtung des Mittelabschnitts 140 des Grundkörpers 132 gerichtet, schließt sich an die Dichtkanten 128 jeweils eine Flanke 148 an.

An einer der jeweiligen Dichtkante 128 abgewandten Seite einer jeden Flanke 148 ist eine Vertiefung 150 oder Einbuchtung 152 der Dichtlippe 127 vorgesehen.

Somit ist insbesondere eine Vertiefung 150 zwischen den zwei die Dichtkante 128 bildenden Vorsprüngen 146 vorgesehen.

Eine weitere Vertiefung 150 ist vorzugsweise zwischen der in axialer Richtung 112 inneren Dichtkante 128i und dem Mittelabschnitt 140 des Grundkörpers 132 gebildet.

Wie Fig. 4 zu entnehmen ist, kann der Mittelabschnitt 140 des Grundkörpers 132 einen Führungsabschnitt 154 umfassen. Dieser Führungsabschnitt 154 weist vorzugsweise eine parallel zur Symmetrieachse 108 verlaufende Oberfläche auf und dient der Abstützung und/oder Führung des beweglichen Bauteils 106 im Falle einer Seitwärtsbewegung des beweglichen Bauteils 106 im Benutzungszustand des Dichtelements 100.

Ein Abstand des Führungsabschnitts 154 von der Symmetrieachse 108 ist dabei vorzugsweise größer als ein Radius R_{B} des beweglichen Bauteils 106.

Die äußere Dichtkante 128a der Dichtlippe 127 bildet eine primäre Dichtkante 128.

Die innere Dichtkante 128i der Dichtlippe 127 bildet eine sekundäre Dichtkante 128.

Wie Fig. 4 zu entnehmen ist, weisen die äußere Dichtkante 128a und die sich in axialer Richtung 112 nach innen gerichtet an diese äußere Dichtkante 128a anschließende Vertiefung 150 einen axialen Abstand Aₐₐ voneinander auf, welcher beispielsweise zumindest näherungsweise einem axialen Abstand Aₐᵢ zwischen der inneren Dichtkante 128i und der sich an diese innere Dichtkante 128i in axialer Richtung 112 nach innen gerichtet anschließenden Vertiefung 150 entspricht.

Vorzugsweise beträgt der Abstand Aaa zwischen ungefähr 0,5 mm bis ungefähr 2,5 mm, beispielsweise zwischen ungefähr 0,5 mm bis ungefähr 1,5 mm, insbesondere zwischen ungefähr 0,6 mm bis ungefähr 1 mm.

Sowohl der Abstand Aaa als auch der Abstand Aₐᵢ sind vorzugsweise bezogen auf die Entfernung der betreffenden Stellen der Dichtlippe 127 voneinander in axialer Richtung 112.

Durch geeignete Wahl der Abstände Aaa und Aₐᵢ kann das Dichtelement 100 beispielsweise bei einer Herstellung desselben in einem Spritzgießverfahren möglichst beschädigungsfrei aus einer (nicht dargestellten) Formgebungsvorrichtung entformt werden. Insbesondere kann die Dichtlippe 127 beim Entformen im Bereich der äußeren Dichtkante 128a in radialer Richtung 114 nach außen gebogen werden, um auch eine möglichst zerstörungsfreie Entformung des die innere Dichtkante 128i bildenden Vorsprungs 146 zu ermöglichen.

Vorzugsweise werden bei der Entformung die äußere Dichtkante 128a und die innere Dichtkante 128i im Wesentlichen gleichmäßig in radialer Richtung 114 nach außen bewegt. Die hierdurch auf die Dichtlippe 127 wirkenden Kräfte können dann vorzugsweise gleichmäßig übertragen und aufgenommen werden.

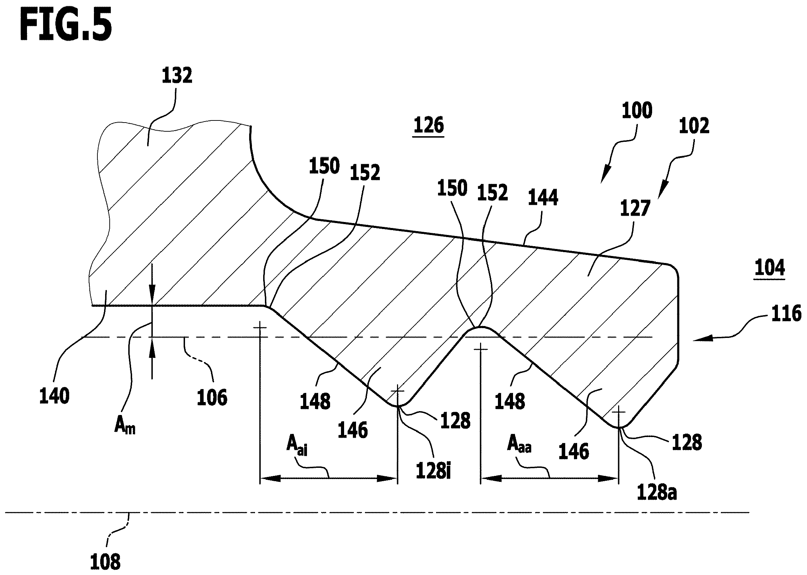

Eine in Fig. 5 dargestellte alternative Ausführungsform einer Dichtlippe 127 eines Dichtelements 100 unterscheidet sich von der in Fig. 4 dargestellten Ausführungsform im Wesentlichen dadurch, dass der Mittelabschnitt 140 keinen Führungsabschnitt 154 aufweist.

Ein Abstand Aₘ zwischen dem Mittelabschnitt 140 und dem beweglichen Bauteil 106 im montierten Zustand des Dichtelements 100 ist folglich größer als bei der in Fig. 4 dargestellten Ausführungsform des Dichtelements 100.

Im Übrigen stimmt die in Fig. 5 dargestellte Ausführungsform hinsichtlich Aufbau und Funktion mit der in Fig. 4 dargestellten Ausführungsform überein, so dass auf deren vorstehende Beschreibung insoweit Bezug genommen wird.

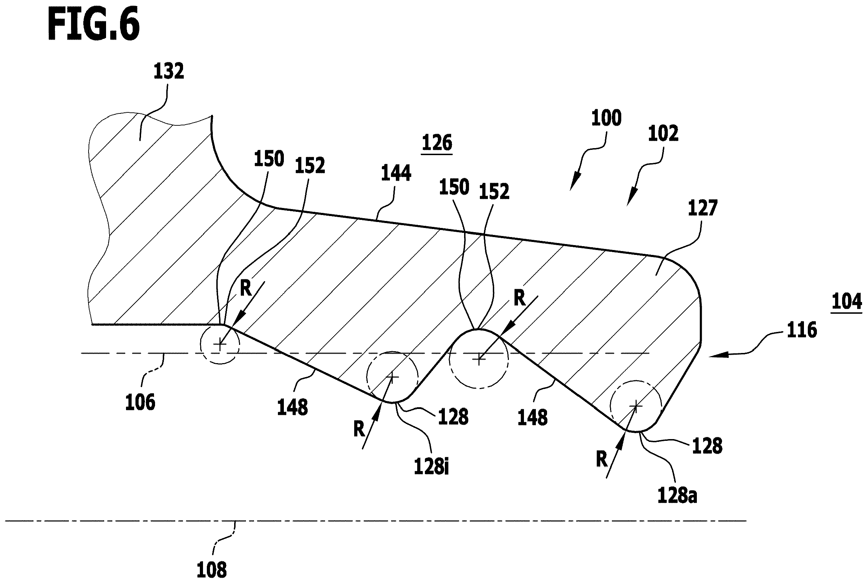

In Fig. 6 sind Radien R der Dichtkanten 128 sowie der Vertiefungen 150 dargestellt. Die Wahl der geeigneten Radien beeinflusst insbesondere eine Entformung des Dichtelements 100 nach einer Herstellung desselben in einem Spritzgießverfahren.

Vorzugsweise sind die Radien R der Dichtkanten 128 sowie der Vertiefungen 150 zumindest näherungsweise ähnlich groß gewählt.

Beispielsweise betragen die Radien zwischen ungefähr 0,1 mm und ungefähr 0,5 mm, insbesondere ungefähr 0,2 mm.

Es können jedoch auch voneinander verschiedene Radien R vorgesehen sein.

Beispielsweise können die Radien R der Dichtkanten 128 größer oder kleiner ausfallen als die Radien R der Vertiefungen 150.

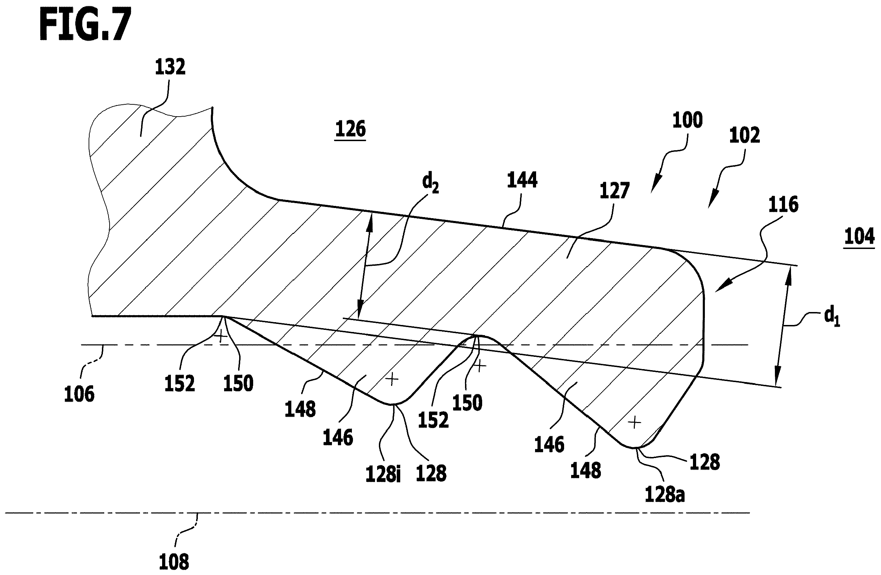

Wie insbesondere Fig. 7 zu entnehmen ist, ist die Dichtlippe 127 vorzugsweise so ausgebildet, dass eine Dichtlippendicke D₁ im Bereich der Vertiefung 150 oder Einbuchtung 152 zwischen dem Mittelabschnitt 140 und der Flanke 148 der inneren Dichtkante 128i größer ist als eine Dichtlippendicke D₂ zwischen den zwei Dichtkanten 128i, 128a im Bereich der dazwischen angeordneten Vertiefung 150 oder Einbuchtung 152.

Die Dichtlippendicke D₁, D₂ ist dabei jeweils ein minimaler Abstand zwischen der Oberseite 144 der Dichtlippe 127 und der jeweiligen Vertiefung 150 oder Einbuchtung 152.

Es kann vorgesehen sein, dass die Dichtlippendicke D₁ beispielsweise zwischen ungefähr 0,4 mm bis ungefähr 1 mm, insbesondere zwischen ungefähr 0,5 mm bis ungefähr 0,7 mm, vorzugsweise ungefähr 0,6 mm, beträgt.

Ferner kann vorgesehen sein, dass die Dichtlippendicke D₂ zwischen ungefähr 0,3 mm bis ungefähr 0,7 mm, insbesondere ungefähr 0,5 mm, beträgt.

Die Dichtlippe 127 ist dabei insbesondere so ausgebildet, dass eine optimale Abdichtung an dem beweglichen Bauteil 106 gewährleistet ist, wenn dieses bewegliche Bauteil 106 beispielsweise einen Radius R_{B} zwischen ungefähr 2 mm bis 9 mm, insbesondere ungefähr 2,5 mm bis ungefähr 6,5 mm, aufweist.

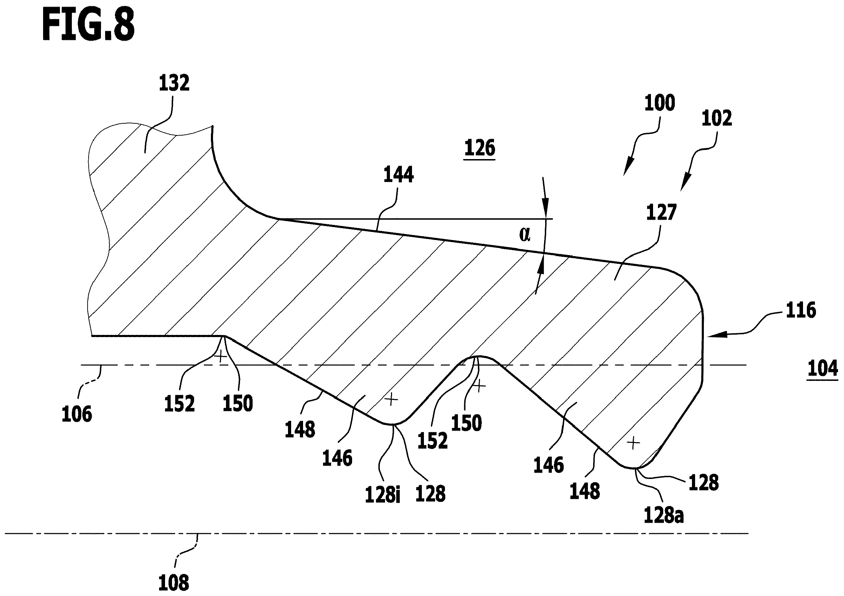

Wie insbesondere Fig. 8 zu entnehmen ist, ragt die Dichtlippe 127 schräg zur axialen Richtung 112 und schräg zur radialen Richtung 114 von dem Mittelabschnitt 140 des Grundkörpers 132 des Dichtelements 100 weg.

Ein Dichtlippenwinkel α, welcher einerseits von der Oberseite 144 der Dichtlippe 127 und andererseits von der Symmetrieachse 108 eingeschlossen wird, beträgt im fertiggestellten Zustand des Grundkörpers 132 vor der Montage eines Federelements 124 vorzugsweise zwischen ungefähr 3° und ungefähr 10°. In einem montagebereiten Zustand des Dichtelements 100, d.h. nach der Montage der Federelemente 124, kann der Dichtlippenwinkel α größer sein, beispielsweise um ungefähr 1° bis 3°.

Es kann vorgesehen sein, dass der Dichtlippenwinkel α bei der Herstellung des Grundkörpers 132 zunächst geringer gewählt wird. Beispielsweise kann bei der Herstellung des Grundkörpers 132 in einem Spritzgießverfahren zunächst ein Dichtlippenwinkel α von 0° vorgesehen sein. Die Oberseite 144 der Dichtlippe 127 verläuft dann im Wesentlichen parallel zur Symmetrieachse 108.

Um eine optimale Dichtwirkung des Dichtelements 100 zu gewährleisten, wird dann nach der Herstellung des Grundkörpers 132 im Spritzgießverfahren vorzugsweise eine Nachbearbeitung oder Nachbehandlung des Grundkörpers 132 durchgeführt.

Insbesondere kann dabei vorgesehen sein, dass die Dichtlippe 127 durch Kaltverformung oder Verformung nach oder während eines Erhitzen der Dichtlippe 127 und/oder des gesamten Grundkörpers 132 umgeformt wird, insbesondere um einen Dichtlippenwinkel α von mehr als ungefähr 3° zu erhalten.

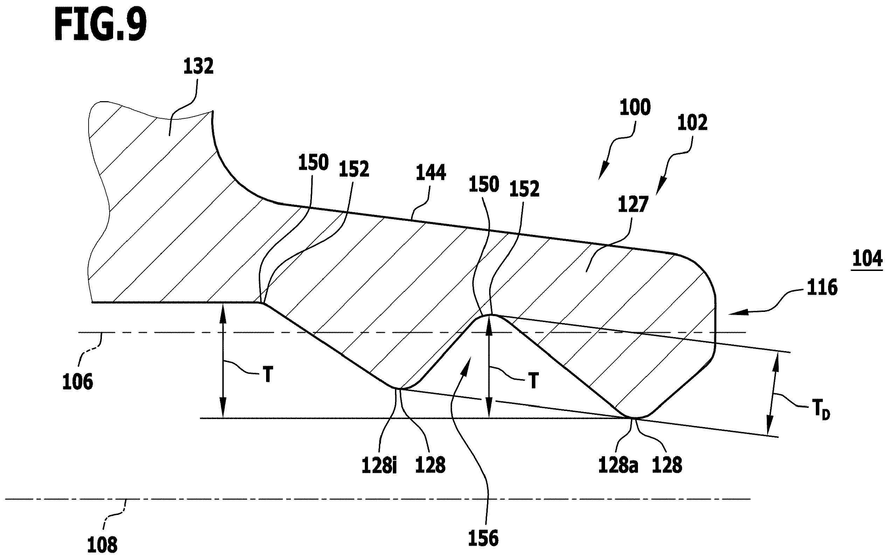

In Fig. 9 sind einerseits Hinterschnitttiefen T dargestellt, welche aufgrund der Geometrie der Dichtlippe 127 beim Entformen des Dichtelements 100 überwunden werden müssen. Eine Hinterschnitttiefe T zwischen den beiden Dichtkanten 128 ist dabei vorzugsweise geringer als eine Hinterschnitttiefe T im Bereich des Mittelabschnitts 140 des Grundkörpers 132 und/oder als im Bereich einer zwischen dem Mittelabschnitt 140 und der Flanke 148 der inneren Dichtkante 128i angeordneten Vertiefung 150 und/der Einbuchtung 152.

Aufgrund der Tatsache, dass die Hinterschnitttiefen T überwunden werden müssen, ist die Entformung des Dichtelements 100 aus einem Spritzgießwerkzeug insbesondere eine Zwangsentformung.

Wie Fig. 9 ferner zu entnehmen ist, weist die Dichtlippe 127 vorzugsweise ein Depot 156 zur Aufnahme eines Mediums, beispielsweise Kraftstoff oder Motoröl, auf. Mittels des Depots 156 kann insbesondere eine Leckage des Dichtelements im Bereich der Dichtlippe 127 zumindest temporär kompensiert werden, in dem das an der äußeren Dichtkante 128a vorbeigeführte Medium in dem Depot 156 aufgenommen wird. Durch geeignete Geometrie der Dichtkanten 128 und/oder der Flanken 148 kann insbesondere bei axialer Bewegung des beweglichen Bauteils 106 nach und nach eine Rückförderung des aufgenommenen Mediums in den angrenzenden Medienraum 104 erfolgen.

Eine Depottiefe T_{D} ist vorzugsweise ein minimaler Abstand zwischen der Vertiefung 150 zwischen den zwei Dichtkanten 128 und einer durch die beiden Dichtkanten 128 verlaufenden Gerade.

Vorzugsweise beträgt die Depottiefe T_{D} zwischen ungefähr 0,1 mm bis ungefähr 0,4 mm, insbesondere zwischen ungefähr 0,15 mm und ungefähr 0,25 mm.

Die hinsichtlich der Fig. 4 bis 9 beschriebenen Parameter einer Dichtlippe 127 treffen vorzugsweise auf eine Dichtlippe 127 eines dynamischen Dichtabschnitts 116 des Dichtelements 100 zu. Ferner kann vorgesehen sein, dass die beschriebenen Werte und Parameter für beide Dichtlippen 127 beider dynamischer Dichtabschnitte 116 zutreffen.

Insbesondere kann vorgesehen sein, dass das Dichtelement 100 bei sämtlichen beschriebenen Ausführungsformen spiegelsymmetrisch bezüglich der Quermittelebene 130 ausgebildet ist.

Ferner ist das Dichtelement 100 vorzugsweise bei jeder beschriebenen Ausführungsform rotationssymmetrisch um die Symmetrieachse 108 ausgebildet.

Bevorzugte Ausführungsformen können die folgenden sein:
1. Dichtelement (100) zum Abdichten zwischen einem mit einem ersten Medium gefüllten ersten Medienraum (104) und einem mit einem zweiten Medium gefüllten zweiten Medienraum (104) im Bereich eines beweglichen Bauteils (106), das längs einer Längsachse (110) des beweglichen Bauteils (106) verschiebbar und/oder längs der Längsachse (110) drehbar durch das Dichtelement (100) hindurchgeführt oder hindurchführbar ist,
   wobei das Dichtelement (100) einen Grundkörper (132) umfasst, welcher zwei an dem beweglichen Bauteil (106) anliegende oder anlegbare dynamische Dichtabschnitte (116) aufweist, wobei jeder dynamische Dichtabschnitt (116) eine Dichtlippe (127) aufweist, wobei jede Dichtlippe (127) jeweils eine, zwei oder mehr Dichtkanten (128) umfasst,
   wobei der Grundkörper (132) vorzugsweise aus einem teilfluorierten oder vollfluorierten thermoplastischen Kunststoffmaterial gebildet ist und zumindest einen Teil seiner endgültigen äußeren Form oder nur einen Teil seiner endgültigen äußeren Form insbesondere in einem Hochdruckprozess und/oder in einem Hochtemperaturprozess erhalten hat.
2. Dichtelement (100) nach Ausführungsform 1, dadurch gekennzeichnet, dass der Grundkörper (132) ein Spritzgussbauteil ist und/oder aus einem spritzgießbaren, teilfluorierten oder vollfluorierten thermoplastischen Kunststoffmaterial gebildet ist.
3. Dichtelement (100) nach einer der Ausführungsformen 1 oder 2, dadurch gekennzeichnet, dass ein Abstand (A) zwischen einer in axialer Richtung (112) äußeren Dichtkante (128) und einer sich in axialer Richtung (112) nach innen gerichtet an diese Dichtkante (128) anschließenden Vertiefung mindestens ungefähr 0,5 mm, vorzugsweise mindestens ungefähr 0,6 mm, beträgt.
4. Dichtelement (100) nach einer der Ausführungsformen 1 bis 3, dadurch gekennzeichnet, dass ein Abstand (A) zwischen einer in axialer Richtung (112) äußeren Dichtkante (128) und einer sich in axialer Richtung (112) nach innen gerichtet an diese Dichtkante (128) anschließenden Vertiefung (150) höchstens ungefähr 1,5 mm, vorzugsweise höchstens ungefähr 1,0 mm, insbesondere höchstens ungefähr 0,9 mm, beispielsweise ungefähr 0,8 mm, beträgt.
5. Dichtelement (100) nach einer der Ausführungsformen 1 bis 4, dadurch gekennzeichnet, dass ein Abstand (A) zwischen einer in axialer Richtung (112) inneren Dichtkante (128) und einer sich in axialer Richtung (112) nach innen gerichtet an diese Dichtkante (128) anschließenden Vertiefung (150) mindestens ungefähr 0,5 mm, vorzugsweise mindestens ungefähr 0,6 mm, beträgt.
6. Dichtelement (100) nach einer der Ausführungsformen 1 bis 5, dadurch gekennzeichnet, dass ein Abstand (A) zwischen einer in axialer Richtung (112) inneren Dichtkante (128) und einer sich in axialer Richtung (112) nach innen gerichtet an diese Dichtkante (128) anschließenden Vertiefung (150) höchstens ungefähr 2,5 mm, vorzugsweise höchstens ungefähr 1,0 mm, insbesondere höchstens ungefähr 0,9 mm, beispielsweise ungefähr 0,8 mm, beträgt.
7. Dichtelement (100) nach einer der Ausführungsformen 1 bis 6, dadurch gekennzeichnet, dass zwei Flankenlängen benachbarter Dichtkanten (128) einer Dichtlippe (127) oder aller Dichtlippen (127) um höchstens ungefähr 15 %, vorzugsweise höchstens ungefähr 5 %, voneinander abweichen.
8. Dichtelement (100) nach einer der Ausführungsformen 1 bis 7, dadurch gekennzeichnet, dass eine Flankenlänge einer in axialer Richtung (112) inneren Dichtkante (128) kleiner ist als eine Flankenlänge einer in axialer Richtung (112) äußeren Dichtkante (128), beispielsweise um mindestens ungefähr 0,05 mm, insbesondere mindestens ungefähr 0,1 mm, und/oder um höchstens ungefähr 0,2 mm, insbesondere höchstens ungefähr 0,15 mm.
9. Dichtelement (100) nach einer der Ausführungsformen 1 bis 8, dadurch gekennzeichnet, dass eine Flankenlänge einer in axialer Richtung (112) äußeren Dichtkante (128) kleiner ist als eine Flankenlänge einer in axialer Richtung (112) inneren Dichtkante (128), beispielsweise um mindestens ungefähr 0,05 mm, insbesondere mindestens ungefähr 0,1 mm, und/oder um höchstens ungefähr 0,2 mm, insbesondere höchstens ungefähr 0,15 mm.
10. Dichtelement (100) nach einer der Ausführungsformen 1 bis 9, dadurch gekennzeichnet, dass ein Dichtkantenwinkel, welcher einerseits von einer sich in axialer Richtung (112) nach innen gerichtet an eine Dichtkante (128) anschließende Flanke (148) der Dichtkante (128) und andererseits von einer Symmetrieachse (108) des Dichtelements (100) eingeschlossen wird, vorzugsweise für jede Dichtkante (128) zumindest näherungsweise gleich groß ist, wobei die Dichtkantenwinkel benachbarter Dichtkanten (128) einer Dichtlippe (127) oder aller Dichtlippen (127) vorzugsweise um höchstens ungefähr 15 %, vorzugsweise höchstens ungefähr 5 %, voneinander abweichen.
11. Dichtelement (100) nach einer der Ausführungsformen 1 bis 10, dadurch gekennzeichnet, dass ein Durchmesser des beweglichen Bauteils (106) vorzugsweise mindestens ungefähr 4 mm, beispielsweise mindestens ungefähr 5 mm, und/oder höchstens ungefähr 18 mm, beispielsweise höchstens ungefähr 13 mm, beträgt.
12. Dichtelement (100) nach einer der Ausführungsformen 1 bis 11, dadurch gekennzeichnet, dass ein Dichtkantenradius einer in axialer Richtung (112) inneren Dichtkante (128) und/oder ein Dichtkantenradius einer in axialer Richtung (112) äußeren Dichtkante (128) mindestens ungefähr 0,1 mm, insbesondere mindestens ungefähr 0,15 mm, beispielsweise ungefähr 0,2 mm, beträgt.
13. Dichtelement (100) nach einer der Ausführungsformen 1 bis 12, dadurch gekennzeichnet, dass ein Dichtkantenradius einer in axialer Richtung (112) inneren Dichtkante (128) und/oder ein Dichtkantenradius einer in axialer Richtung (112) äußeren Dichtkante (128) höchstens ungefähr 0,5 mm, insbesondere höchstens ungefähr 0,25 mm, beträgt.
14. Dichtelement (100) nach einer der Ausführungsformen 1 bis 13, dadurch gekennzeichnet, dass eine Dichtlippendicke (D) an einer schmalsten Stelle auf einer Innenseite einer in axialer Richtung (112) inneren Dichtkante (128) mindestens ungefähr 0,4 mm, vorzugsweise mindestens ungefähr 0,5 mm, beispielsweise ungefähr 0,6 mm, beträgt.
15. Dichtelement (100) nach einer der Ausführungsformen 1 bis 14, dadurch gekennzeichnet, dass eine Dichtlippendicke (D) an einer schmalsten Stelle auf einer Innenseite einer in axialer Richtung (112) inneren Dichtkante (128) höchstens ungefähr 1,0 mm, vorzugsweise höchstens ungefähr 0,7 mm, beträgt.
16. Dichtelement (100) nach einer der Ausführungsformen 1 bis 15, dadurch gekennzeichnet, dass eine Dichtlippendicke (D) an einer schmalsten Stelle zwischen einer in axialer Richtung (112) inneren Dichtkante (128) und einer in axialer Richtung (112) äußeren Dichtkante (128) mindestens ungefähr 0,3 mm, vorzugsweise mindestens ungefähr 0,4 mm, beispielsweise ungefähr 0,5 mm, beträgt.
17. Dichtelement (100) nach einer der Ausführungsformen 1 bis 16, dadurch gekennzeichnet, dass eine Dichtlippendicke (D) an einer schmalsten Stelle zwischen einer in axialer Richtung (112) inneren Dichtkante (128) und einer in axialer Richtung (112) äußeren Dichtkante (128) höchstens ungefähr 0,9 mm, vorzugsweise höchstens ungefähr 0,6 mm, beträgt.
18. Dichtelement (112) nach einer der Ausführungsformen 1 bis 17, dadurch gekennzeichnet, dass in einem fertiggestellten Zustand des Grundkörpers (132) ein Dichtlippenwinkel einer oder beider Dichtlippen (127) beispielsweise mindestens ungefähr 2°, vorzugsweise mindestens ungefähr 3°, insbesondere ungefähr 5°, beträgt.
19. Dichtelement (100) nach einer der Ausführungsformen 1 bis 18, dadurch gekennzeichnet, dass in einem fertiggestellten Zustand des Grundkörpers (132) ein Dichtlippenwinkel einer oder beider Dichtlippen (127) beispielsweise höchstens ungefähr 12°, vorzugsweise höchstens ungefähr 10°, insbesondere ungefähr 8°, beträgt.
20. Dichtelement (100) nach einer der Ausführungsformen 1 bis 19, dadurch gekennzeichnet, dass ein Höhenunterschied zwischen einer Dichtkante (128) und einer sich in axialer Richtung (112) nach innen gerichtet an diese Dichtkante (128) anschließenden Vertiefung und/oder eine Depottiefe der Dichtlippe (127) mindestens ungefähr 0,1 mm, vorzugsweise mindestens ungefähr 0,15 mm, beispielsweise mindestens ungefähr 0,2 mm, beträgt.
21. Dichtelement (100) nach einer der Ausführungsformen 1 bis 20, dadurch gekennzeichnet, dass ein Höhenunterschied zwischen einer Dichtkante (128) und einer sich in axialer Richtung (112) nach innen gerichtet an diese Dichtkante (128) anschließenden Vertiefung und/oder eine Depottiefe der Dichtlippe (127) höchstens ungefähr 0,4 mm, vorzugsweise höchstens ungefähr 0,3 mm, beispielsweise höchstens ungefähr 0,25 mm, beträgt.
22. Dichtelement (100), insbesondere nach einer der Ausführungsformen 1 bis 21, zum Abdichten zwischen einem mit einem ersten Medium gefüllten ersten Medienraum (104) und einem mit einem zweiten Medium gefüllten zweiten Medienraum (104) im Bereich eines beweglichen Bauteils (106), das längs einer Längsachse (110) des beweglichen Bauteils (106) verschiebbar und/oder längs der Längsachse (110) drehbar durch das Dichtelement (100) hindurchgeführt oder hindurchführbar ist,
   wobei das Dichtelement (100) einen Grundkörper (132) umfasst, welcher zwei an dem beweglichen Bauteil (106) anliegende oder anlegbare dynamische Dichtabschnitte (116) aufweist,
   wobei jeder dynamische Dichtabschnitt (116) eine Dichtlippe (127) aufweist, wobei jede Dichtlippe (127) jeweils eine, zwei oder mehr Dichtkanten (128) umfasst,
   wobei der Grundkörper (132) aus einem spritzgießbaren, teilfluorierten oder vollfluorierten thermoplastischen Kunststoffmaterial gebildet ist.
23. Dichtelement (100) nach einer der Ausführungsformen 1 bis 23, dadurch gekennzeichnet, dass das der Grundkörper (132) des Dichtelements (100) durch drehende und/oder spanende Bearbeitung zumindest einen Teil seiner endgültigen äußeren Form oder nur einen Teil seiner endgültigen äußeren Form oder seine vollständige endgültige äußere Form erhalten hat.
24. Dichtelement (100) nach einer der Ausführungsformen 1 bis 23, dadurch gekennzeichnet, dass eine im montierten Zustand des Dichtelements (100) dem beweglichen Bauteil (106) zugewandte Innenseite oder Unterseite (142) des Grundkörpers (132) nach einem Formgebungsschritt nachbearbeitet ist.
25. Dichtelement (100) nach einer der Ausführungsformen 1 bis 24, dadurch gekennzeichnet, dass ein Fluorpolymeranteil des thermoplastischen Kunststoffmaterials hinsichtlich seiner Masse und/oder seines Volumens mindestens ungefähr 85%, vorzugsweise mindestens ungefähr 90%, beispielsweise ungefähr 94%, beträgt.
26. Dichtelement (100) nach einer der Ausführungsformen 1 bis 25, dadurch gekennzeichnet, dass ein Fluorpolymeranteil des thermoplastischen Kunststoffmaterials hinsichtlich seiner Masse und/oder seines Volumens höchstens ungefähr 99%, vorzugsweise höchstens ungefähr 96%, beispielsweise ungefähr 94%, beträgt.
27. Dichtelement (100) nach einer der Ausführungsformen 1 bis 26, dadurch gekennzeichnet, dass ein Kohlefaseranteil des thermoplastischen Kunststoffmaterials hinsichtlich seiner Masse und/oder seines Volumens mindestens ungefähr 0,5%, vorzugsweise mindestens ungefähr 2%, beispielsweise ungefähr 4%, beträgt.
28. Dichtelement (100) nach einer der Ausführungsformen 1 bis 27, dadurch gekennzeichnet, dass ein Kohlefaseranteil des thermoplastischen Kunststoffmaterials hinsichtlich seiner Masse und/oder seines Volumens höchstens ungefähr 10%, vorzugsweise höchstens ungefähr 6%, beispielsweise ungefähr 4%, beträgt.
29. Dichtelement (100) nach einer der Ausführungsformen 1 bis 28, dadurch gekennzeichnet, dass ein Graphitanteil des thermoplastischen Kunststoffmaterials hinsichtlich seiner Masse und/oder seines Volumens mindestens ungefähr 0,5%, vorzugsweise mindestens ungefähr 1,5%, beispielsweise ungefähr 2%, beträgt.
30. Dichtelement (100) nach einer der Ausführungsformen 1 bis 29, dadurch gekennzeichnet, dass ein Graphitanteil des thermoplastischen Kunststoffmaterials hinsichtlich seiner Masse und/oder seines Volumens höchstens ungefähr 6%, vorzugsweise höchstens ungefähr 4%, beispielsweise ungefähr 2%, beträgt.
31. Hochdruckpumpe (102), umfassend mindestens ein Dichtelement (100) nach einer der Ausführungsformen 1 bis 30.
32. Verwendung einer Hochdruckpumpe (102) nach Ausführungsform 31 zum Einspritzen eines Kraftstoffs in einen Verbrennungsmotor.
33. Verwendung eines Dichtelements (100) nach einer der Ausführungsformen 1 bis 30 als Stangendichtung, Kolbendichtung und/oder Wellendichtung, insbesondere in einer Kraftstoffpumpe und/oder eine Kolbenpumpe.
34. Verwendung eines spritzgießbaren, teilfluorierten oder vollfluorierten Kunststoffmaterials zur Herstellung eines Dichtelements (100), insbesondere eines Dichtelements (100) nach einer der Ausführungsformen 1 bis 30.
35. Verfahren zur Herstellung eines Dichtelements (100), insbesondere eines Dichtelements (100) nach einer der Ausführungsformen 1 bis 30, umfassend:
   Herstellen eines Grundkörpers (132) des Dichtelements (100) aus einem teilfluorierten oder vollfluorierten thermoplastischen Kunststoffmaterial,
   wobei der Grundkörper (132) vorzugsweise zumindest einen Teil seiner endgültigen äußeren Form oder nur einen Teil seiner endgültigen äußeren Form insbesondere in einem Hochdruckprozess und/oder in einem Hochtemperaturprozess erhält.
36. Verfahren nach Ausführungsform 35, dadurch gekennzeichnet, dass der Hochdruckprozess einen Prägeprozess, einen Pressprozess, einen Spritzprozess und/oder einen Druckgussprozess umfasst.
37. Verfahren nach einer der Ausführungsformen 35 oder 36, dadurch gekennzeichnet, dass der Hochtemperaturprozess einen Heißprägeprozess, einen Heißpressprozess, einen Spritzprozess, einen Gussprozess, einen Sinterprozess und/oder einen Thermoformprozess umfasst.
38. Verfahren nach einer der Ausführungsformen 35 bis 37, dadurch gekennzeichnet, dass der Grundkörper (132) des Dichtelements (100) nach der Durchführung des Hochdruckprozesses und/oder des Hochtemperaturprozesses nur abschnittsweise nachbearbeitet wird.
39. Verfahren nach einer der Ausführungsformen 35 bis 38, dadurch gekennzeichnet, dass der Grundkörper (132) vollständig oder abschnittsweise spanend bearbeitet und/oder beschichtet wird.
40. Verfahren nach einer der Ausführungsformen 35 bis 39, dadurch gekennzeichnet, dass ein oder mehrere Dichtabschnitte (116, 122) des Dichtelements (100), insbesondere Dichtkanten (128), durch mechanische, insbesondere spanende, Bearbeitung des Grundkörpers (132) hergestellt werden.
41. Verfahren nach einer der Ausführungsformen 35 bis 40, dadurch gekennzeichnet, dass der Grundkörper (132) in einem Spritzgießschritt eine erste Form erhält, bei welcher ein Dichtlippenwinkel einer oder beider Dichtlippen (127) des dynamischen Dichtabschnitts (116) ca. 3° oder weniger beträgt.
42. Verfahren nach Ausführungsform 41, dadurch gekennzeichnet, dass der Grundkörper (132) derart nachbehandelt wird, insbesondere derart thermisch und/oder mechanisch nachbehandelt wird, dass der Dichtlippenwinkel einer oder beider Dichtlippen (127) des dynamischen Dichtabschnitts (116) auf mehr als ungefähr 3°, beispielsweise mindestens ungefähr 5°, vergrößert wird.
43. Verfahren, insbesondere nach einer der Ausführungsformen 35 bis 42, zur Herstellung eines Dichtelements (100), insbesondere eines Dichtelements (100) nach einer der Ausführungsformen 1 bis 30, umfassend:
   Herstellen eines Grundkörpers (132) des Dichtelements (100) aus einem spritzgießbaren, teilfluorierten oder vollfluorierten thermoplastischen Kunststoffmaterial.
44. Verfahren nach einer der Ausführungsformen 35 bis 43, dadurch gekennzeichnet, dass der Grundkörper (132) des Dichtelements (100) durch drehende und/oder spanende Bearbeitung zumindest einen Teil seiner endgültigen äußeren Form oder nur einen Teil seiner endgültigen äußeren Form oder seine vollständige endgültige äußere Form erhält.
45. Verfahren nach einer der Ausführungsformen 35 oder 44, dadurch gekennzeichnet, dass eine im montierten Zustand des Dichtelements (100) dem beweglichen Bauteil (106) zugewandte Innenseite oder Unterseite (142) des Grundkörpers (132) nach einem Formgebungsschritt nachbearbeitet wird.
46. Verfahren nach einer der Ausführungsformen 35 bis 45, dadurch gekennzeichnet, dass durch drehende und/oder spanende Bearbeitung eine oder mehrere Dichtkanten (128) und/oder Einbuchtungen (152) und/oder Vertiefungen (150) ausgebildet und/oder nachgearbeitet werden.
47. Verfahren nach Ausführungsform 46, dadurch gekennzeichnet, dass die drehende und/oder spanende Bearbeitung unter Verwendung eines axial und radial verfahrbaren Werkzeugs erfolgt, welches gemäß einer zu erzeugenden Innenkontur des Grundkörpers (100) axial und radial an demselben entlanggeführt wird.
48. Verfahren nach einer der Ausführungsformen 46 oder 47, dadurch gekennzeichnet, dass die drehende und/oder spanende Bearbeitung unter Verwendung eines Werkzeugs erfolgt, welches einen zu der zu erzeugenden Innenkontur des Grundkörpers (100) komplementären Bearbeitungsrand, insbesondere eine Bearbeitungsschneide, umfasst.
49. Verfahren nach Ausführungsform 48, dadurch gekennzeichnet, dass das Werkzeug in radialer Richtung von innen nach außen an den Grundkörper (100) herangeführt wird, insbesondere derart, dass ohne axiale Bewegung in einem Bearbeitungsschritt die gewünschte Innenkontur des Grundkörpers (132) fertiggestellt wird.
50. Verfahren nach einer der Ausführungsformen 35 bis 49, dadurch gekennzeichnet, dass das thermoplastische Kunststoffmaterial als ein Compoundmaterial aus (nach Gewicht und/oder Volumen) ungefähr 94% Fluorpolymer, ungefähr 4% Kohlefaser und ungefähr 2% Graphit hergestellt wird.
51. Verfahren nach einer der Ausführungsformen 35 bis 50, dadurch gekennzeichnet, dass das thermoplastische Kunststoffmaterial in aufeinanderfolgenden Zonen einer Plastifiziereinheit einer Compoundieranlage nacheinander auf folgende Temperaturen gebracht wird: 80 ± 20 °C, 340 ± 20 °C, 360 ± 20, °C, 365 ± 20 °C, 350 ± 20 °C, 340 ± 20 °C.
52. Verfahren nach einer der Ausführungsformen 35 bis 51, dadurch gekennzeichnet, dass das thermoplastische Kunststoffmaterial in aufeinanderfolgenden Zonen einer Plastifiziereinheit einer Spritzgießvorrichtung zur Herstellung von Dichtelementen (100) nacheinander auf folgende Temperaturen gebracht wird: 350 ± 20 °C, 365 ± 20 °C, 370 ± 20, °C, 375 ± 20 °C, 380 ± 20 °C.

## Patentansprüche

1. Dichtelement (100) zur Verwendung als Stangendichtung, Kolbendichtung und/oder Wellendichtung in einer Kraftstoffpumpe und/oder einer Kolbenpumpe zum Abdichten zwischen einem mit einem ersten Medium gefüllten ersten Medienraum (104) und einem mit einem zweiten Medium gefüllten zweiten Medienraum (104) im Bereich eines beweglichen Bauteils (106), das längs einer Längsachse (110) des beweglichen Bauteils (106) verschiebbar und/oder längs der Längsachse (110) drehbar durch das Dichtelement (100) hindurchgeführt oder hindurchführbar ist,
wobei das Dichtelement (100) einen Grundkörper (132) umfasst, welcher zwei an dem beweglichen Bauteil (106) anliegende oder anlegbare dynamische Dichtabschnitte (116) aufweist,
wobei jeder dynamische Dichtabschnitt (116) eine Dichtlippe (127) aufweist, wobei jede Dichtlippe (127) jeweils eine, zwei oder mehr Dichtkanten (128) umfasst,
**dadurch gekennzeichnet,**
**dass** der Grundkörper (132) aus einem teilfluorierten oder vollfluorierten thermoplastischen Kunststoffmaterial gebildet ist und zumindest einen Teil seiner endgültigen äußeren Form oder nur einen Teil seiner endgültigen äußeren Form in einem Spritzgussprozess erhalten hat.

2. Dichtelement (100) nach Anspruch 1, **dadurch gekennzeichnet, dass** der Grundkörper (132) ein Spritzgussbauteil ist und/oder aus einem spritzgießbaren, teilfluorierten oder vollfluorierten thermoplastischen Kunststoffmaterial gebildet ist.

3. Dichtelement (100) nach einem der Ansprüche 1 oder 2, **dadurch gekennzeichnet, dass**
a) ein Abstand (A) zwischen einer in axialer Richtung (112) äußeren Dichtkante (128) und einer sich in axialer Richtung (112) nach innen gerichtet an diese Dichtkante (128) anschließenden Vertiefung mindestens ungefähr 0,5 mm, vorzugsweise mindestens ungefähr 0,6 mm, beträgt; und/oder
b) ein Abstand (A) zwischen einer in axialer Richtung (112) äußeren Dichtkante (128) und einer sich in axialer Richtung (112) nach innen gerichtet an diese Dichtkante (128) anschließenden Vertiefung (150) höchstens ungefähr 1,5 mm, vorzugsweise höchstens ungefähr 1,0 mm, insbesondere höchstens ungefähr 0,9 mm, beispielsweise ungefähr 0,8 mm, beträgt; und/oder
c) ein Abstand (A) zwischen einer in axialer Richtung (112) inneren Dichtkante (128) und einer sich in axialer Richtung (112) nach innen gerichtet an diese Dichtkante (128) anschließenden Vertiefung (150) mindestens ungefähr 0,5 mm, vorzugsweise mindestens ungefähr 0,6 mm, beträgt; und/oder
d) ein Abstand (A) zwischen einer in axialer Richtung (112) inneren Dichtkante (128) und einer sich in axialer Richtung (112) nach innen gerichtet an diese Dichtkante (128) anschließenden Vertiefung (150) höchstens ungefähr 2,5 mm, vorzugsweise höchstens ungefähr 1,0 mm, insbesondere höchstens ungefähr 0,9 mm, beispielsweise ungefähr 0,8 mm, beträgt.

4. Dichtelement (100) nach einem der Ansprüche 1 bis 3, **dadurch gekennzeichnet, dass**
a) zwei Flankenlängen benachbarter Dichtkanten (128) einer Dichtlippe (127) oder aller Dichtlippen (127) um höchstens ungefähr 15 %, vorzugsweise höchstens ungefähr 5 %, voneinander abweichen; und/oder
b) eine Flankenlänge einer in axialer Richtung (112) inneren Dichtkante (128) kleiner ist als eine Flankenlänge einer in axialer Richtung (112) äußeren Dichtkante (128), beispielsweise um mindestens ungefähr 0,05 mm, insbesondere mindestens ungefähr 0,1 mm, und/oder um höchstens ungefähr 0,2 mm, insbesondere höchstens ungefähr 0,15 mm; und/oder
c) eine Flankenlänge einer in axialer Richtung (112) äußeren Dichtkante (128) kleiner ist als eine Flankenlänge einer in axialer Richtung (112) inneren Dichtkante (128), beispielsweise um mindestens ungefähr 0,05 mm, insbesondere mindestens ungefähr 0,1 mm, und/oder um höchstens ungefähr 0,2 mm, insbesondere höchstens ungefähr 0,15 mm.

5. Dichtelement (100) nach einem der Ansprüche 1 bis 4, **dadurch gekennzeichnet, dass**
a) ein Dichtkantenwinkel, welcher einerseits von einer sich in axialer Richtung (112) nach innen gerichtet an eine Dichtkante (128) anschließende Flanke (148) der Dichtkante (128) und andererseits von einer Symmetrieachse (108) des Dichtelements (100) eingeschlossen wird, vorzugsweise für jede Dichtkante (128) zumindest näherungsweise gleich groß ist, wobei die Dichtkantenwinkel benachbarter Dichtkanten (128) einer Dichtlippe (127) oder aller Dichtlippen (127) vorzugsweise um höchstens ungefähr 15 %, vorzugsweise höchstens ungefähr 5 %, voneinander abweichen; und/oder
b) ein Durchmesser des beweglichen Bauteils (106) vorzugsweise mindestens ungefähr 4 mm, beispielsweise mindestens ungefähr 5 mm, und/oder höchstens ungefähr 18 mm, beispielsweise höchstens ungefähr 13 mm, beträgt; und/oder
c) ein Dichtkantenradius einer in axialer Richtung (112) inneren Dichtkante (128) und/oder ein Dichtkantenradius einer in axialer Richtung (112) äußeren Dichtkante (128) mindestens ungefähr 0,1 mm, insbesondere mindestens ungefähr 0,15 mm, beispielsweise ungefähr 0,2 mm, beträgt und/oder
d) ein Dichtkantenradius einer in axialer Richtung (112) inneren Dichtkante (128) und/oder ein Dichtkantenradius einer in axialer Richtung (112) äußeren Dichtkante (128) höchstens ungefähr 0,5 mm, insbesondere höchstens ungefähr 0,25 mm, beträgt.

6. Dichtelement (100) nach einem der Ansprüche 1 bis 5, **dadurch gekennzeichnet, dass**
a) eine Dichtlippendicke (D) an einer schmalsten Stelle auf einer Innenseite einer in axialer Richtung (112) inneren Dichtkante (128) mindestens ungefähr 0,4 mm, vorzugsweise mindestens ungefähr 0,5 mm, beispielsweise ungefähr 0,6 mm, beträgt; und/oder
b) eine Dichtlippendicke (D) an einer schmalsten Stelle auf einer Innenseite einer in axialer Richtung (112) inneren Dichtkante (128) höchstens ungefähr 1,0 mm, vorzugsweise höchstens ungefähr 0,7 mm, beträgt; und/oder
c) eine Dichtlippendicke (D) an einer schmalsten Stelle zwischen einer in axialer Richtung (112) inneren Dichtkante (128) und einer in axialer Richtung (112) äußeren Dichtkante (128) mindestens ungefähr 0,3 mm, vorzugsweise mindestens ungefähr 0,4 mm, beispielsweise ungefähr 0,5 mm, beträgt; und/oder
d) eine Dichtlippendicke (D) an einer schmalsten Stelle zwischen einer in axialer Richtung (112) inneren Dichtkante (128) und einer in axialer Richtung (112) äußeren Dichtkante (128) höchstens ungefähr 0,9 mm, vorzugsweise höchstens ungefähr 0,6 mm, beträgt.

7. Dichtelement (112) nach einem der Ansprüche 1 bis 6, **dadurch gekennzeichnet, dass**
a) in einem fertiggestellten Zustand des Grundkörpers (132) ein Dichtlippenwinkel einer oder beider Dichtlippen (127) beispielsweise mindestens ungefähr 2°, vorzugsweise mindestens ungefähr 3°, insbesondere ungefähr 5°, beträgt; und/oder
b) in einem fertiggestellten Zustand des Grundkörpers (132) ein Dichtlippenwinkel einer oder beider Dichtlippen (127) beispielsweise höchstens ungefähr 12°, vorzugsweise mindestens ungefähr 10°, insbesondere ungefähr 8°, beträgt; und/oder
c) ein Höhenunterschied zwischen einer Dichtkante (128) und einer sich in axialer Richtung (112) nach innen gerichtet an diese Dichtkante (128) anschließenden Vertiefung und/oder eine Depottiefe der Dichtlippe (127) mindestens ungefähr 0,1 mm, vorzugsweise mindestens ungefähr 0,15 mm, beispielsweise mindestens ungefähr 0,2 mm, beträgt; und/oder
d) ein Höhenunterschied zwischen einer Dichtkante (128) und einer sich in axialer Richtung (112) nach innen gerichtet an diese Dichtkante (128) anschließenden Vertiefung und/oder eine Depottiefe der Dichtlippe (127) höchstens ungefähr 0,4 mm, vorzugsweise höchstens ungefähr 0,3 mm, beispielsweise höchstens ungefähr 0,25 mm, beträgt.

8. Hochdruckpumpe (102), umfassend mindestens ein Dichtelement (100) nach einem der Ansprüche 1 bis 7.

9. Verwendung einer Hochdruckpumpe (102) nach Anspruch 8 zum Einspritzen eines Kraftstoffs in einen Verbrennungsmotor.

10. Verwendung eines Dichtelements (100) nach einem der Ansprüche 1 bis 7 als Stangendichtung, Kolbendichtung und/oder Wellendichtung, insbesondere in einer Kraftstoffpumpe und/oder eine Kolbenpumpe.

11. Verfahren zur Herstellung eines Dichtelements (100) nach einem der Ansprüche 1 bis 7, umfassend:
Herstellen eines Grundkörpers (132) des Dichtelements (100) aus einem teilfluorierten oder vollfluorierten thermoplastischen Kunststoffmaterial,
wobei der Grundkörper (132) zumindest einen Teil seiner endgültigen äußeren Form oder nur einen Teil seiner endgültigen äußeren Form in einem Spritzgussprozess erhält.

12. Verfahren nach Anspruch 11, **dadurch gekennzeichnet, dass** der Grundkörper (132) des Dichtelements (100) nach der Durchführung des Spritzgussprozesses nur abschnittsweise nachbearbeitet wird.

13. Verfahren nach Anspruch 12, **dadurch gekennzeichnet, dass** der Grundkörper (132) vollständig oder abschnittsweise spanend bearbeitet und/oder beschichtet wird, wobei vorzugsweise ein oder mehrere Dichtabschnitte (116, 122) des Dichtelements (100), insbesondere Dichtkanten (128), durch mechanische, insbesondere spanende, Bearbeitung des Grundkörpers (132) hergestellt werden.

14. Verfahren nach einem der Ansprüche 11 bis 13, **dadurch gekennzeichnet, dass** der Grundkörper (132) in einem Spritzgießschritt eine erste Form erhält, bei welcher ein Dichtlippenwinkel einer oder beider Dichtlippen (127) des dynamischen Dichtabschnitts (116) ca. 3° oder weniger beträgt, wobei der Grundkörper (132) vorzugsweise derart nachbehandelt wird, insbesondere derart thermisch und/oder mechanisch nachbehandelt wird, dass der Dichtlippenwinkel einer oder beider Dichtlippen (127) des dynamischen Dichtabschnitts (116) auf mehr als ungefähr 3°, beispielsweise mindestens ungefähr 5°, vergrößert wird.
